# EUROPÄISCHE PATENTANMELDUNG

(11) **EP 3 196 573 A1**
(43) Veröffentlichungstag der Anmeldung: **26.07.2017**
(21) Anmeldenummer: 16000147.5
(22) Anmeldetag: 21.01.2016
(51) Int. Cl.: F25J 3/04, F25J 5/00

(54) **VERFAHREN ZUR GEWINNUNG EINES LUFTPRODUKTS UND LUFTZERLEGUNGS ANLAGE**

(71) Anmelder: Linde Aktiengesellschaft, 80331 München (DE)
(72) Erfinder: Alekseev, Alexander, 82515 Wolfratshausen (DE)
(74) Vertreter: Imhof, Dietmar

(57) **Zusammenfassung**

Ein Verfahren zur Erzeugung eines Luftprodukts in einer Luftzerlegungsanlage (100) mit einer Wärmetauscheinheit (10), einer Entspannungs-/Verdichtungseinheit (20), einer Rektifikationseinheit (30), einer Flüssigkeitsspeichereinheit (40), einer Kältespeichereinheit (50) sowie einem Hauptluftverdichter (1), umfasst, dass die gesamte, der Rektifikationseinheit (30) zugeführte Luft durch den Hauptluftverdichter (1) geführt und dort zunächst auf ein Druckniveau verdichtet wird, das mindestens 3 bar oberhalb des höchsten Druckniveaus liegt, auf dem die Rektifikationseinheit (30) betrieben wird, unter Verwendung der durch den Hauptluftverdichter (1) geführten Luft in der Rektifikationseinheit (30) eine oder mehrere tiefkalte Flüssigkeiten in einem ersten Betriebsmodus in einer ersten, in einem zweiten Betriebsmodus in einer zweiten und in einem dritten Betriebsmodus in einer dritten Produktionsmenge erzeugt werden, die eine oder die mehreren tiefkalten Flüssigkeiten in dem dritten Betriebsmodus in einer Einspeichermenge, die einer Teilmenge der dritten Produktionsmenge entspricht, in der Flüssigkeitsspeichereinheit (40) eingespeichert und in dem zweiten Betriebsmodus in einer Ausspeichermenge aus der Flüssigkeitsspeichereinheit (40) ausgespeichert werden, die eine oder die mehreren tiefkalten Flüssigkeiten in dem ersten Betriebsmodus in einer ersten, in dem zweiten Betriebsmodus in einer zweiten und in dem dritten Betriebsmodus in einer dritten Verdampfungsmenge verdampft und/oder pseudoverdampft werden, wobei die erste Verdampfungsmenge der ersten Produktionsmenge, die zweite Verdampfungsmenge der zweiten Produktionsmenge zuzüglich der Ausspeichermenge und die dritte Verdampfungsmenge der dritten Produktionsmenge abzüglich der Einspeichermenge entspricht, und unter Verwendung der durch den Hauptluftverdichter (1) geführten Luft in dem zweiten Betriebsmodus ein tiefkalter Fluidstrom, unter Verwendung dessen die Kältespeichereinheit (50) abgekühlt wird, und der sich hierdurch erwärmt, und in dem dritten Betriebsmodus ein warmer Fluidstrom, unter Verwendung dessen die Kältespeichereinheit (50) erwärmt wird, und der sich hierdurch abkühlt, gebildet werden.

## Beschreibung

Die Erfindung betrifft ein Verfahren zur Gewinnung eines Luftprodukts in einer Luftzerlegungsanlage und eine entsprechende Luftzerlegungsanlage.

### Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben. Die vorliegende Erfindung eignet sich in besonderer Weise für Luftzerlegungsanlagen mit Innenverdichtung, wie a.a.O., Abschnitt 2.2.5.2, "Internal Compression", erläutert.

Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssigem Sauerstoff, LOX, gasförmigem Sauerstoff, GOX, flüssigem Stickstoff, LIN und/oder gasförmigem Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein.

Beispielsweise aus der DE 31 39 567 A1 und der EP 1 989 400 A1 ist bekannt, Flüssigluft oder Flüssigstickstoff zur Netzregelung und zur Bereitstellung von Regelleistung in Stromnetzen zu verwenden. Die Flüssigluft oder der Flüssigstickstoff wird zu Zeiten großen Stromangebots (nachfolgend als Stromüberschusszeiträume bezeichnet) in einer Luftzerlegungsanlage mit einem integrierten Verflüssiger oder in einer dezidierten Verflüssigungsanlage gewonnen und in einem Tanksystem mit Tieftemperaturtanks gespeichert. Zu Zeiten geringen Stromangebots (nachfolgend als Strommangelzeiträume bezeichnet) wird die Flüssigluft oder der Flüssigstickstoff aus dem Tanksystem entnommen, mittels einer Pumpe druckerhöht und bis auf etwa Umgebungstemperatur oder höher angewärmt und damit in einen gasförmigen oder überkritischen Zustand überführt. Ein hierdurch erhaltener Druckstrom wird in einer Energiespeichereinheit in einer Entspannungsturbine oder mehreren Entspannungsturbinen mit Zwischenerwärmung bis auf Umgebungsdruck entspannt. Die dabei freiwerdende mechanische Leistung wird in einem oder mehreren Generatoren der Kraftwerkseinheit in elektrische Energie umgewandelt und in ein elektrisches Netz eingespeist.

Die vorliegende Erfindung betrifft weniger das Gebiet der bloßen Speicherung von Energie, sondern will eine Luftzerlegungsanlage schaffen, in der sowohl in Stromüberschusszeiträumen als auch in Strommangelzeiträumen Luftprodukte, insbesondere innenverdichteter Druckstickstoff und/oder Drucksauerstoff, vorteilhafterweise in vergleichbarer Menge, bereitgestellt werden können. Gleichzeitig sollen jedoch die geringeren Strompreise in den Stromüberschusszeiträumen genutzt und die höheren Strompreise in den Strommangelzeiträumen vermieden werden.

### Offenbarung der Erfindung

Diese Aufgabe wird durch ein Verfahren zur Gewinnung eines Luftprodukts in einer Luftzerlegungsanlage und eine entsprechende Luftzerlegungsanlage mit den Merkmalen der unabhängigen Patentansprüche gelöst. Ausgestaltungen sind Gegenstand der abhängigen Patentansprüche sowie der nachfolgenden Beschreibung.

Vor der Erläuterung der Merkmale und Vorteile der vorliegenden Erfindung werden deren Grundlagen und die verwendeten Begriffe erläutert.

Die erläuterten Vorrichtungen sind auch in der einschlägigen Fachliteratur, beispielsweise a.a.O., Abschnitt 2.2.5.6, "Apparatus", beschrieben. Sofern die nachfolgenden Definitionen nicht hiervon abweichen, wird zum hier verwendeten Sprachgebrauch ausdrücklich auf die Fachliteratur verwiesen.

Ein "Wärmetauscher" dient zur indirekten Übertragung von Wärme zwischen zumindest zwei z.B. im Gegenstrom zueinander geführten Fluidströmen, beispielsweise einem warmen Druckluftstrom und einem oder mehreren kalten Fluidströmen oder einem tiefkalten flüssigen Luftprodukt und einem oder mehreren warmen Fluidströmen. Ein Wärmetauscher kann aus einem einzelnen oder mehreren parallel und/oder seriell verbundenen Wärmetauscherabschnitten gebildet sein, z.B. aus einem oder mehreren Plattenwärmetauscherblöcken. Es handelt sich beispielsweise um einen Plattenwärmetauscher (engl. Plate Fin Heat Exchanger). Ein derartiger Wärmetauscher, beispielsweise auch der "Hauptwärmetauscher" einer Luftzerlegungsanlage, durch den zumindest der überwiegende Teil der in einer Luftzerlegungsanlage abzukühlenden bzw. zu erwärmenden Fluidströme abgekühlt bzw. erwärmt wird, weist "Passagen" auf, die als voneinander getrennte Fluidkanäle mit Wärmeaustauschflächen ausgebildet und parallel und durch andere Passagen getrennt zu "Passagengruppen" zusammengeschlossen sind. Kennzeichen eines Wärmetauschers ist, dass in ihm zu einem Zeitpunkt Wärme zwischen zwei mobilen Medien ausgetauscht wird, nämlich wenigstens einem abzukühlenden und wenigstens einem zu erwärmenden Fluidstrom. Hierin besteht ein wesentlicher Unterschied zu einer Kältespeichereinheit, wie sie nachfolgend erläutert wird, und in der ein Wärmetausch immer zwischen einem oder mehreren mobilen und einem oder mehreren stationären Medien erfolgt.

Eine "Kältespeichereinheit" dient der Speicherung thermischer Energie in Form von Kälte, also entzogener Wärmeenergie. Insbesondere können Kältespeichereinheiten zum Einsatz im Rahmen der vorliegenden Erfindung konstruktiv ähnlich den Regeneratoren ausgebildet sein, wie sie grundsätzlich aus dem Bereich der Luftzerlegungsanlagen bekannt sind. Wie unten ausführlich erläutert, weicht ihr Betrieb jedoch fundamental von jenem von Regeneratoren ab.

Regeneratoren sind beispielsweise bei F.G. Kerry, Industrial Gas Handbook, CRC Press, 2006, insbesondere Abschnitte 2.7, "Kapitza Cycle", und 4.4.3, "Recovery of Krypton and Xenon", erläutert. Regeneratoren weisen ein zur Kältespeicherung geeignetes Material, im einfachsten Fall beispielsweise eine Steinschüttung, auf, die während eines ersten Zeitraums von einem kalten, insbesondere tiefkalten, Fluidstrom durchströmt wird und sich hierdurch abkühlt. Während eines zweiten Zeitraums wird ein entsprechender Regenerator von einem warmen Fluidstrom durchströmt, der sich aufgrund der in dem Regenerator gespeicherten Kälte abkühlt bzw. seine Wärme auf den Regenerator überträgt. Regeneratoren können in Luftzerlegungsanlagen auch zur Reinigung der eingesetzten Luft von insbesondere Kohlendioxid und Kohlenwasserstoffen eingesetzt werden, die in dem abgekühlten Regenerator ausfrieren bzw. sich verflüssigen und bei der Aufheizung des Regenerators verdampft beziehungsweise sublimiert werden. Entsprechende Regeneratoren werden in Luftzerlegungsanlagen klassischer Art typischerweise im Wechselbetrieb gefahren, wobei jeweils ein erster Regenerator bzw. eine erste Gruppe von Regeneratoren regeneriert wird und ein zweiter Regenerator bzw. eine zweite Gruppe von Regeneratoren zur Abkühlung bzw. Reinigung der Einsatzluft bereit steht.

Wie erwähnt, können Kältespeichereinheiten zum Einsatz im Rahmen der vorliegenden Erfindung zwar konstruktiv ähnlich den bekannten Regeneratoren ausgeführt werden, verfahrenstechnisch jedoch sind die Unterschiede jedoch groß. Diese Unterschiede zwischen Kältespeichereinheiten und Regeneratoren werden im Folgenden erörtert.

Ein Regenerator hat in erster Linie die Funktion eines Wärmeübertragers, d.h. er dient dazu, die Wärme von einem wärmeren Fluidstrom an einen kälteren Fluidstrom zu übertragen, im Gegensatz zu einem Wärmetauscher erfolgt hier jedoch eine Zwischenspeicherung der Kälte in einem stationären Medium. In einem Luftzerlegungsverfahren werden deswegen immer mindestens zwei Regeneratoren benötigt. Durch einen der Regeneratoren wird der wärmere Fluidstrom geleitet und durch den anderen der kältere Fluidstrom. Ein derartiges Regeneratorpaar kann verfahrenstechnisch grundsätzlich durch einen einzigen konventionellen Wärmetauscher ersetzt werden, in dem die genannten Fluidströme einen Wärmetausch vornehmen. Werden Regeneratoren ohne Ersatz durch einen Wärmetauscher außer Betrieb genommen, so ist die Luftzerlegungsanlage grundsätzlich nicht mehr funktionsfähig.

Die Hauptfunktion eines Kältespeichers besteht dagegen in der Speicherung der Kälte für eine längere Zeit von beispielsweise mehr als 30 Minuten. Ein Kältespeicher kann grundsätzlich nicht durch einen Wärmetauscher ersetzt werden, da sein Hauptzweck die Speicherung der Kälte zur Entnahme zu einem späteren Zeitpunkt ist, ein Wärmetauscher hingegen Wärme bzw. Kälte zu jedem Zeitpunkt zwischen zwei mobilen Medien überträgt. Ein Kältespeicher wird regelmäßig als einzelner Kältespeicher eingesetzt. Wenn der Kältespeicher nicht in Betrieb ist, kann die Luftzerlegungsanlage grundsätzlich störungsfrei weiter laufen.

Ein Regenerator hat grundsätzlich nur zwei Betriebsphasen. Zuerst wird ein kalter oder tiefkalter Fluidstrom durch den Regenerator geführt und hier angewärmt (der Regenerator gekühlt), in der Regel kürzer als zehn Minuten. Danach wird der Regenerator von einem warmen Fluidstrom in Gegenrichtung durchströmt, der dabei abgekühlt wird (der Regenerator angewärmt), in der Regel kürzer als zehn Minuten.

Ein Kältespeicher hat hingegen mindestens drei Betriebsphasen. In einer Einspeicherungsphase wird der Kältespeicher zuerst durch einen kalten oder tiefkalten Fluidstrom abgekühlt; in der Regel dauert dies länger als eine Stunde. Anschließend bleibt der Kältespeicher während einer Speicherphase über längere Zeiten kalt und wird nicht durchströmt. In einer Ausspeicherungsphase wird der Kältespeicher dann von einem warmen Fluidstrom durchströmt und angewärmt (der Fluidstrom wird dabei gekühlt); in der Regel dauert das länger als eine Stunde. Danach kann wieder eine Ruhephase folgen, die auch mehrere Stunden dauern kann und in der der Kältespeicher nicht durchströmt wird.

Auch andere thermodynamische Parameter sind unterschiedlich. So beträgt die durchschnittliche lokale Temperaturänderung in einem Regenerator weniger als 10 K, ein Kältespeicher wird hingegen im Inneren durchschnittlich um ca. 50 K, mindestens aber um 30 K, angewärmt bzw. abgekühlt.

Eine "Entspannungsturbine" bzw. "Entspannungsmaschine", die über eine gemeinsame Welle mit weiteren Entspannungsturbinen oder Energiewandlern wie Ölbremsen, Generatoren oder Verdichtern gekoppelt sein kann, ist zur Entspannung eines gasförmigen oder zumindest teilweise flüssigen Stroms eingerichtet. Insbesondere können Entspannungsturbinen zum Einsatz in der vorliegenden Erfindung als Turboexpander ausgebildet sein. Wird ein Verdichter mit einer oder mehreren Entspannungsturbinen angetrieben, jedoch ohne extern, beispielsweise mittels eines Elektromotors, zugeführte Energie, wird der Begriff "turbinengetriebener" Verdichter oder alternativ "Booster" verwendet. Anordnungen aus turbinengetriebenen Verdichtern und Entspannungsturbinen werden auch als "Boosterturbinen" bezeichnet.

Ein "Luftprodukt" ist jedes Produkt, das zumindest durch Verdichten und Abkühlen von Luft und insbesondere, jedoch nicht notwendigerweise, durch eine anschließende Tieftemperaturrektifikation hergestellt werden kann. Insbesondere kann es sich hierbei um flüssigen oder gasförmigen Sauerstoff (LOX, GOX), flüssigen oder gasförmigen Stickstoff (LIN, GAN), flüssiges oder gasförmiges Argon (LAR, GAR), flüssiges oder gasförmiges Xenon, flüssiges oder gasförmiges Krypton, flüssiges oder gasförmiges Neon, flüssiges oder gasförmiges Helium usw. handeln, aber auch beispielsweise um Flüssigluft (LAIR). Die Begriffe "Sauerstoff", "Stickstoff' usw. bezeichnen dabei jeweils auch tiefkalte Flüssigkeiten oder Gase, die die jeweils genannte Luftkomponente in einer Menge aufweisen, die oberhalb jener atmosphärischer Luft liegt. Es muss sich also nicht um reine Flüssigkeiten oder Gase mit hohen Gehalten handeln.

Im Rahmen der vorliegenden Anmeldung wird unter einem "Luftprodukt" ferner ein entsprechendes Fluid verstanden, das aus der Luftzerlegungsanlage endgültig ausgeleitet wird, das also nicht mehr für eine Entspannung, Verdampfung, Verflüssigung, Verdichtung usw. in der Luftzerlegungsanlage verwendet bzw. einem entsprechenden Schritt unterworfen wird. Durch Verdichten und Abkühlen von Luft und insbesondere, jedoch nicht notwendigerweise, durch eine anschließende Tieftemperaturrektifikation hergestellte Fluide, die nur zwischengespeichert werden oder temporär vorliegen, jedoch anschließend in der Luftzerlegungsanlage weiterbehandelt werden, werden hier nicht als Luftprodukte bezeichnet. Ein Beispiel hierfür ist insbesondere eine aus Luft hergestellte tiefkalte Flüssigkeit, die aber nicht als Luftprodukt aus der Luftzerlegungsanlage ausgeleitet sondern im Rahmen eines Innenverdichtungsverfahrens flüssig druckbeaufschlagt und anschließend im Hauptwärmetauscher einer Luftzerlegungsanlage erwärmt wird. Es wird also erst dort das eigentliche Luftprodukt gebildet.

Luftzerlegungsanlagen können, wie eingangs erwähnt, mit sogenannter Innenverdichtung betrieben werden. Zu Details sei auf die zitierte Fachliteratur verwiesen. Bei der Innenverdichtung wird ein flüssig druckerhöhter Strom erwärmt und dadurch vom flüssigen in den gasförmigen oder überkritischen Zustand überführt, je nachdem, auf welches Druckniveau der flüssige Fluidstrom gebracht wurde. Für die Überführung vom flüssigen in den gasförmigen Zustand wird nachfolgend auch der Begriff "Verdampfung", für die Überführung vom flüssigen in den überkritischen Zustand auch der Begriff "Pseudoverdampfung" verwendet.

Bei der Luftzerlegung können grundsätzlich Verfahren eingesetzt werden, bei denen die gesamte Einsatzluft, d.h. sämtliche Luft, die in das Destillationssäulensystem eingespeist wird, zunächst mittels eines Hauptluftverdichters (engl. Main Air Compressor, MAC) in etwa auf den Druck der Hochdrucksäule gebracht und nur ein Teil hiervon anschließend mittels eines Nachverdichters (engl. Booster Air Compressor, BAC) auf einen höheren Druck nachverdichtet wird. Diese eher konventionellen Verfahren werden auch als MAC/BAC-Verfahren bezeichnet. MAC/BAC-Verfahren sind beispielsweise in der eingangs zitierten Fachliteratur ausführlich beschrieben.

Bei einem MAC/BAC-Verfahren wird ein beträchtlicher Teil der durch den Hauptluftverdichter geführten, sogenannten Einsatzluft (i.d.R. mehr als 30% hiervon) bei typischerweise ca. 5,2 bis 9 bar, insbesondere ca. 5,6 bar, in die Hochdrucksäule eines Doppelsäulensystems eingespeist und zuvor im Hauptwärmetauscher der Luftzerlegungsanlage von etwa Umgebungstemperatur oder darüber auf typischerweise ca. -160 bis -170 °C abgekühlt. Dieser Anteil wird zuvor nur vom Hauptluftverdichter bis auf den genannten Druck verdichtet und erfährt typischerweise keine Nachverdichtung. Ein zweiter Teil der der durch den Hauptluftverdichter geführten gesamten Einsatzluft, der sogenannte Drosselstrom, wird in einem MAC/BAC-Verfahren hingegen im Nachverdichter vom soeben genannten Druck des Hauptluftverdichters bis auf einen deutlich höheren Druck, in der Regel überkritischen Druck, verdichtet, und ebenfalls im Hauptwärmetauscher der Luftzerlegungsanlage von etwa Umgebungstemperatur oder darüber auf typischerweise ca. -160 bis -170 °C abgekühlt. Ein dritter Luftstrom, der sogenannte Turbinenstrom, der im Hauptwärmetauscher nur auf eine Zwischentemperatur von typischerweise ca. -100 bis -150 °C abgekühlt und anschließend in einer Entspannungsmaschine entspannt wird, kann in bekannten MAC/BAC-Verfahren sowohl durch den Hauptluftverdichter als auch durch den Nachverdichter (über einen geeigneten Austritt oder eine entsprechende Zwischenentnahme) bereitgestellt werden.

Neuerdings werden anstelle der MAC/BAC-Verfahren zunehmend sogenannte HAP-Verfahren (engl. High Air Pressure) eingesetzt, da diese im Vergleich zu den MAC/BAC-Verfahren in bestimmten Einsatzszenarien Vorteile bieten können. Bei einem HAP-Verfahren wird die gesamte Einsatzluft im Hauptluftverdichter auf einen Druck verdichtet, der deutlich über dem Druck in der Hochdrucksäule bzw. dem höchsten Betriebsdruck in der eingesetzten Rektifikationseinheit liegt. Der verwendete Druckunterschied beträgt dabei mindestens 3 bar, kann jedoch auch deutlich höher sein, beispielsweise bei 4, 5, 6, 7, 8, 9 oder 10 bar und beispielsweise bis zu 14, 16, 18 oder 20 bar liegen. HAP-Verfahren sind beispielsweise aus der EP 2 466 236 A1, der EP 2 458 311 A1 und der US 5 329 776 A bekannt.

Bei einem HAP-Verfahren wird die Luft, die der zuvor beschriebenen Luft entspricht, die in einem MAC/BAC-Verfahren in die Hochdrucksäule eingespeist und zuvor im Hauptwärmetauscher der Luftzerlegungsanlage von etwa Umgebungstemperatur oder darüber auf typischerweise ca. -160 bis -170 °C abgekühlt wird, nicht in dieser Weise behandelt. Sie wird nicht dem Hauptwärmetauscher entnommen sondern stattdessen dem Austritt einer oder mehrerer Entspannungsmaschinen, in welcher oder welchen diese Luft von dem deutlich höheren Druckniveau des Haupluftverdichters entspannt wird und sich erst hierdurch auf typischerweise ca. -160 bis -170°C abkühlt. Diese Luft wird auch als "Einspeiseluft" (engl. Feed Air) bezeichnet. Auch in HAP-Verfahren wird ein Drosselstrom eingesetzt; dieser muss aber im Gegensatz zu einem MAC/BAC-Verfahren nicht notwendigerweise in einem mit extern bereitgestellter Energie angetriebenen Verdichter verdichtet werden. Der Drosselstrom, oder auch mehrere Drosselströme, kann oder können hier auch lediglich mittels eines oder mehrerer Booster, der oder die beispielsweise von der oder den soeben erwähnten Entspannungsmaschinen angetrieben werden kann bzw. können, nachverdichtet werden. Ein separater Turbinenstrom muss nicht vorhanden sein.

### Vorteile der Erfindung

Die vorliegende Erfindung schlägt ein Verfahren zur Erzeugung eines Luftprodukts in einer Luftzerlegungsanlage vor, die zumindest eine Wärmetauscheinheit, eine Entspannungs-/Verdichtungseinheit, eine Rektifikationseinheit, eine Flüssigkeitsspeichereinheit, eine Kältespeichereinheit sowie einen Hauptluftverdichter aufweist. Die Wärmetauscheinheit der erfindungsgemäßen Luftzerlegungsanlage umfasst zumindest einen Wärmetauscher, insbesondere den bekannten Hauptwärmetauscher, wie er in herkömmlichen Luftzerlegungsanlagen anzutreffen ist. Ein derartiger Hauptwärmetauscher kann auch in Form mehrerer getrennter Wärmetauscheinheiten bzw. Wärmetauscherblöcke ausgebildet sein.

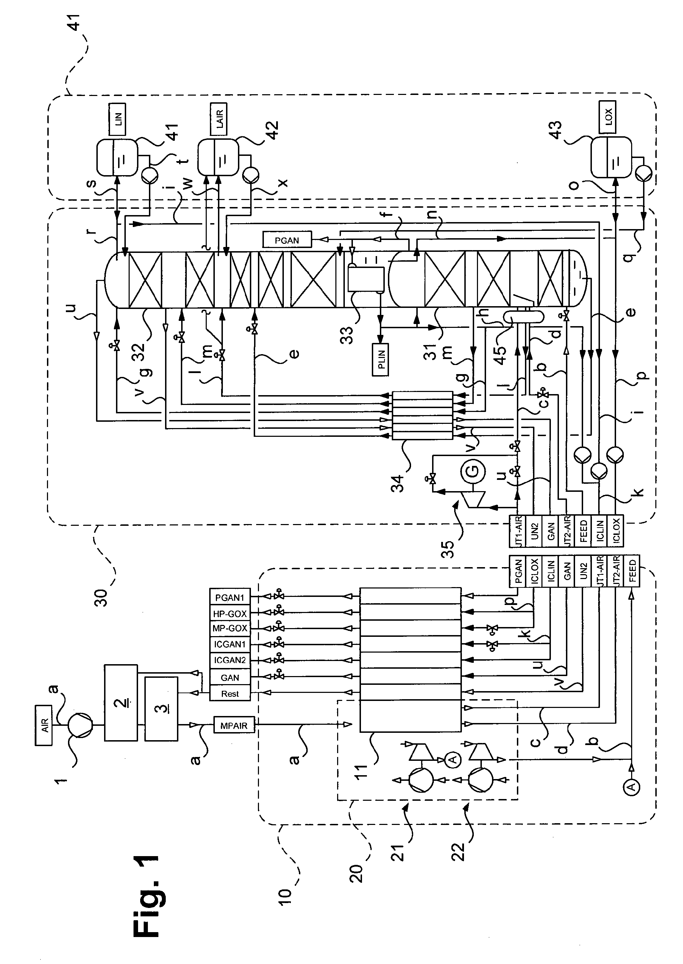

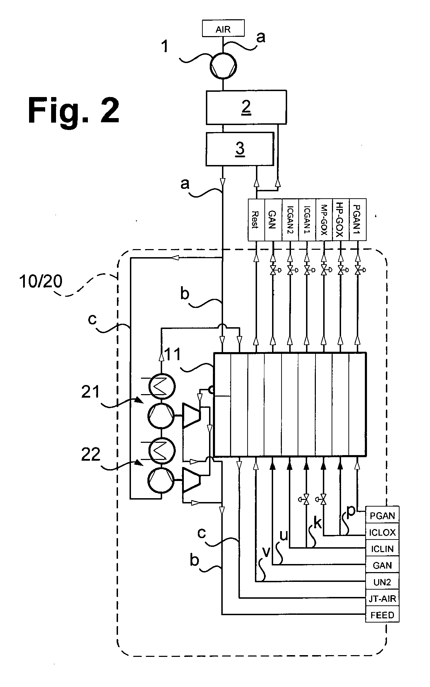

Die Entspannungs-/Verdichtungseinheit dient dazu, die der Luftzerlegungsanlage zugeführte, im Hauptluftverdichter verdichtete Einsatzluft teilweise zu entspannen und teilweise nachzuverdichten, um auf diese Weise Druckluftströme auf unterschiedlichen Druckniveaus bereitzustellen. Eine entsprechende Entspannungs-/Verdichtungseinheit kann hierzu jeweils geeignete Entspannungsturbinen und Verdichter aufweisen, die insbesondere auch miteinander gekoppelt sein können. Es können also turbinengetriebene Verdichter bzw. Boosterturbinen wie zuvor erläutert vorhanden sein. Auch beispielsweise Generatorturbinen können eingesetzt werden, jedoch insbesondere keine mit externer Energie angetriebene Verdichter. Zu Details sei auf die beigefügten Figuren 1 und 2 verwiesen, in denen weitere Aspekte entsprechender Entspannungs-/Verdichtungseinheiten erläutert werden.

Die Rektifikationseinheit der erfindungsgemäß eingesetzten Luftzerlegungsanlage kann insbesondere eine klassische Linde-Doppelsäule mit einer Hochdrucksäule und einer Niederdrucksäule mit oder ohne Argongewinnung bzw. mit oder ohne Abtrennung von Krypton und Xenon und mit oder ohne Abtrennung von Helium und Neon aufweisen. Auch andere Konfigurationen sind jedoch möglich. Die Flüssigkeitsspeichereinheit der erfindungsgemäß eingesetzten Luftzerlegungsanlage umfasst insbesondere einen oder mehrere, insbesondere temperaturisolierte bzw. in einer geeigneten Coldbox angeordnete, Flüssigtanks für tiefkalte Luftprodukte, wie sie zuvor erläutert wurden. Diese werden nachfolgend als "Flüssigluftspeicher", "Flüssigstickstoffspeicher" usw. bezeichnet. Der Hauptluftverdichter kann insbesondere mehrere Verdichtungsstufen umfassen und als Radialverdichter ausgebildet sein.

Im Rahmen der vorliegenden Erfindung wird die gesamte, der Rektifikationseinheit zugeführte Luft, also die gesamte Einsatzluft, durch den Hauptluftverdichter geführt und dort zunächst auf ein Druckniveau verdichtet, das mindestens 3 bar oberhalb des höchsten Druckniveaus liegt, auf dem die Rektifikationseinheit betrieben wird. Bei letzterem handelt es sich typischerweise um den Betriebsdruck der Hochdrucksäule, wenn ein Doppelsäulensystem zum Einsatz kommt. Das Luftzerlegungsverfahren ist somit als HAP-Verfahren ausgebildet, wie es zuvor erläutert wurde. Der Druckunterschied kann auch noch höher liegen, beispielsweise bei den oben ausführlich erwähnten Werten.

Vorteilhafterweise umfasst das Verfahren außer der Verdichtung in dem Hauptluftverdichter keine weitere Verdichtung der Einsatzluft oder irgendeines Teils hiervon in einem mit externer Energie angetriebenen Verdichter. Falls eine teilweise weitere Verdichtung der Einsatzluft erfolgt, wird diese, mit anderen Worten, stets und ausschließlich mittels turbinengetriebener Verdichter wie oben erläutert vorgenommen.

Unter Verwendung der entsprechend hoch verdichteten, durch den Hauptluftverdichter geführten Luft bzw. Einsatzluft werden in der Luftzerlegungsanlage gemäß der vorliegenden Erfindung eine oder mehrere tiefkalte Flüssigkeiten erzeugt, und zwar in einem ersten Betriebsmodus in einer ersten Produktionsmenge, in einem zweiten Betriebsmodus in einer zweiten Produktionsmenge und in einem dritten Betriebsmodus in einer dritten Produktionsmenge. Die Menge der gebildeten tiefkalten Flüssigkeiten korreliert stark mit dem Energieverbrauch der Luftzerlegungsanlage. Vorteilhafterweise ist die zweite Produktionsmenge dabei geringer als die erste Produktionsmenge und die dritte Produktionsmenge ist größer als die erste Produktionsmenge.

Ist hier und nachfolgend jeweils von unterschiedlichen "Betriebsmodi" die Rede, sei unter dem "zweiten Betriebsmodus" jener Betriebsmodus verstanden, wie er zu Strommangelzeiträumen durchgeführt wird. Entsprechend wird unter dem "dritten Betriebsmodus" jener Betriebsmodus verstanden, der in Stromüberschusszeiten durchgeführt wird. Weil vorteilhafterweise, wie erwähnt, die zweite Produktionsmenge der tiefkalten Flüssigkeit(en) geringer als die erste Produktionsmenge und die dritte Produktionsmenge größer als die erste Produktionsmenge ist, wird im zweiten Betriebsmodus im Rahmen der vorliegenden Erfindung deutlich weniger Energie verbraucht als im dritten, aber auch im ersten Betriebsmodus. Der Energieverbrauch im dritten Betriebsmodus ist hingegen höher als in den beiden anderen Betriebsmodi. Auf diese Weise kann das vorhandene Stromangebot unter Vermeidung hoher Kosten mittels des erfindungsgemäßen Verfahrens jeweils effizient genutzt werden. Der "erste Betriebsmodus" lässt sich hingegen mit dem Betrieb einer Luftzerlegungsanlage ohne Flüssigkeitsspeichereinheit vergleichen.

Insbesondere um in sämtlichen Betriebsmodi gleiche oder vergleichbare Mengen an Luftprodukten bereitstellen zu können, wird die Flüssigkeitsspeichereinheit verwendet. Hierbei werden die eine oder die mehreren tiefkalten Flüssigkeiten in dem dritten Betriebsmodus in einer Einspeichermenge, die einer Teilmenge der dritten Produktionsmenge entspricht, in der Flüssigkeitsspeichereinheit gespeichert und in dem zweiten Betriebsmodus in einer Ausspeichermenge aus der Flüssigkeitsspeichereinheit ausgespeichert. Mit anderen Worten wird die in dem dritten Betriebsmodus "im Überschuss" in der dritten Produktionsmenge produzierte tiefkalte Flüssigkeit in der Flüssigkeitsspeichereinheit zwischengespeichert, um sie dieser im zweiten Betriebsmodus wieder entnehmen und zur Kompensation der hier geringeren Flüssigproduktion in Form der zweiten Produktionsmenge nutzen zu können. Der erste Betriebsmodus zeichnet sich hingegen insbesondere dadurch aus, dass in die Flüssigkeitsspeichereinheit weder tiefkalte Flüssigkeiten eingespeichert werden noch diese der Flüssigkeitsspeichereinheit entnommen werden.

Die eine oder die mehreren tiefkalten Flüssigkeiten werden in dem ersten Betriebsmodus in einer ersten Verdampfungsmenge, in dem zweiten Betriebsmodus in einer zweiten Verdampfungsmenge und in dem dritten Betriebsmodus in einer dritten Verdampfungsmenge verdampft und/oder pseudoverdampft, wobei die erste Verdampfungsmenge der ersten Produktionsmenge, die zweite Verdampfungsmenge der zweiten Produktionsmenge zuzüglich der Ausspeichermenge und die dritte Verdampfungsmenge der dritten Produktionsmenge abzüglich der Einspeichermenge entspricht. Mit anderen Worten wird die geringere Produktionsmenge in dem zweiten Betriebsmodus durch die Ausspeichermenge kompensiert. Die erste, zweite und dritte Verdampfungsmenge entsprechen einander vorteilhafterweise oder sind zumindest größenordnungsmäßig vergleichbar, weichen also beispielsweise um nicht mehr als 20%, 10%, 5% oder 1 % voneinander ab. Auf diese Weise kann ungeachtet unterschiedlich energieverbrauchender Produktionsmengen stets eine vergleichbare Menge (innenverdichteter) Luftprodukte bereitgestellt werden.

Zur Zwischenspeicherung der Kälte, die in dem zweiten Betriebsmodus durch die Entnahme der tiefkalten Flüssigkeit(en) aus der Flüssigkeitsspeichereinheit und deren Verdampfung frei wird und damit im Überschuss zur Verfügung steht, sowie zur Bereitstellung von Kälte, die in dem dritten Betriebsmodus für die Bereitstellung der in die Flüssigkeitsspeichereinheit einzuspeichernden tiefkalten Flüssigkeit(en) zusätzlich benötigt wird, wird eine Kältespeichereinheit der zuvor erläuterten Art verwendet. Zum Wärmeaustausch mit dieser werden tiefkalte bzw. warme Fluidströme verwendet. Erfindungsgemäß ist hierzu vorgesehen, dass, ebenfalls unter Verwendung der durch den Hauptluftverdichter geführten Luft, in dem zweiten Betriebsmodus ein tiefkalter Fluidstrom, unter Verwendung dessen die Kältespeichereinheit abgekühlt wird, und der sich hierdurch erwärmt, und in dem dritten Betriebsmodus ein warmer Fluidstrom, unter Verwendung dessen die Kältespeichereinheit erwärmt wird, und der sich hierdurch abkühlt, gebildet werden. In dem ersten Betriebsmodus wird die Kältespeichereinheit hingegen vorteilhafterweise nicht von entsprechenden Fluidströmen durchströmt. Beispiele für derartige Fluidströme sind auch nachfolgend unter Bezugnahme auf die beigefügten Figuren erläutert.

Ein "tiefkalter" Fluidstrom liegt insbesondere auf einem Temperaturniveau von deutlich unter -100 °C, beispielsweise bei -160 bis -170 °C vor. Hingegen liegt ein "warmer" Fluidstrom beispielsweise auf einem Temperaturniveau vor, das mindestens der Umgebungstemperatur oder beispielsweise mindestens 0 °C entspricht. Sein Temperaturniveau liegt jedenfalls oberhalb jenes des tiefkalten Fluidstroms. Durch die erläuterten Maßnahmen kann die bei der Verdampfung des oder der tiefkalten Flüssigkeiten freiwerdende Kälte in dem zweiten Betriebsmodus gespeichert werden. Diese Kälte steht damit für den dritten Betriebsmodus, in dem zusätzliche tiefkalte Flüssigkeiten produziert und in der Flüssigkeitsspeichereinheit gespeichert werden sollen, zur Verfügung.

Das erfindungsgemäße Verfahren, das, wie bereits erläutert, bei einem HAP-Verfahren zum Einsatz kommt, umfasst insbesondere, wie in einem derartigen HAP-Verfahren üblich, dass ein Teil der durch den Hauptluftverdichter geführten und dort verdichteten Luft anschließend auf ein Druckniveau entspannt wird, das mindestens dem höchsten Druckniveau entspricht, auf dem die Rektifikationseinheit betrieben wird. Die Luft kann dabei auf einen Druck geringfügig oberhalb dieses höchsten Druckniveaus entspannt werden, beispielsweise auf ein Druckniveau, das weniger als 1 bar oberhalb dieses höchsten Druckniveaus liegt, so dass sie ohne weitere Fördermaßnahmen in die Hochdrucksäule der Rektifikationseinheit eingespeist werden kann. Für eine derartige Entspannung sind, wie bereits erläutert, insbesondere Entspannungsturbinen bereitgestellt. Durch die Entspannung in diesen kühlt sich die entspannte Luft beispielsweise auf -160 bis -170 °C ab, obwohl sie zuvor in der Wärmetauscheinheit nicht derart abgekühlt wurde.

Vorteilhafterweise können dabei der tiefkalte und der warme Fluidstrom, die im dritten bzw. zweiten Betriebsmodus durch die Kältespeichereinheit geführt werden, aus einem Teil dieser entspannten Luft gebildet werden. Um den tiefkalten und den warmen Fluidstrom auf ihren unterschiedlichen Temperaturniveaus bereitzustellen und hierdurch die erfindungsgemäß vorgeschlagene Kältespeicherung zu ermöglichen, kann ein Teil dieser entspannten Luft zur Bildung des tiefkalten Fluidstroms nach der Entspannung unerwärmt als der tiefkalte Fluidstrom verwendet werden. Zur Bildung des warmen Fluidstroms wird ein entsprechender Teil dieser entspannten Luft hingegen in der Wärmetauscheinheit erwärmt. Nach der Erwärmung des tiefkalten Fluidstroms in der Kältespeichereinheit, wodurch die Kältespeichereinheit abgekühlt wird, wird dieser vorteilhafterweise wieder auf ein Temperaturniveau abgekühlt, auf dem dieser in die Rektifikationseinheit eingespeist werden kann, beispielsweise auf ein Temperaturniveau von -160 bis -170 °C. Auf diese Weise ergibt sich eine vorteilhafte Kopplung bzw. Wärmeübertragung zwischen der Wärmetauscheinheit bzw. einem in dieser eingesetzten Hauptwärmetauscher und der Kältespeichereinheit bzw. hier eingesetzten Kältespeichermitteln.

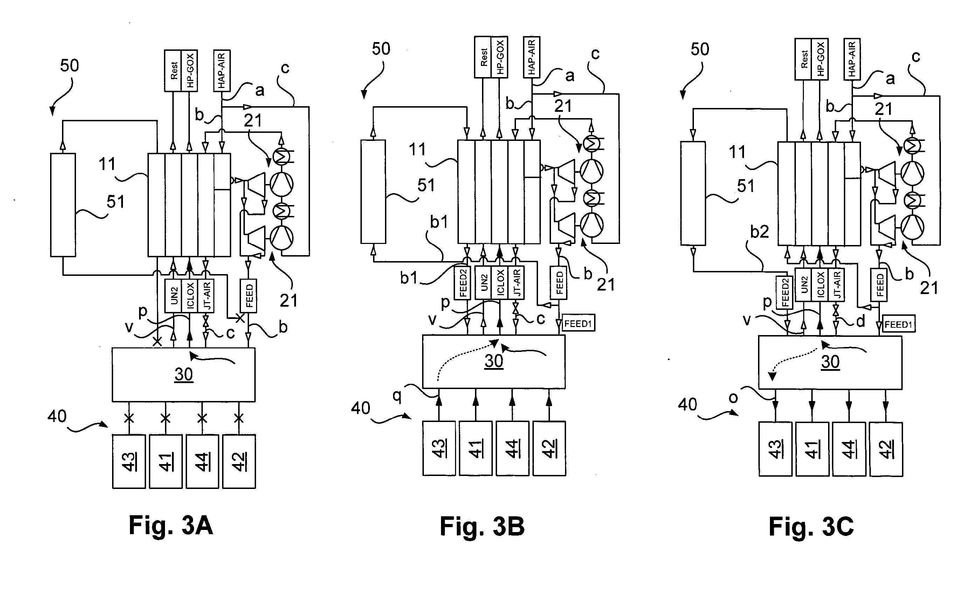

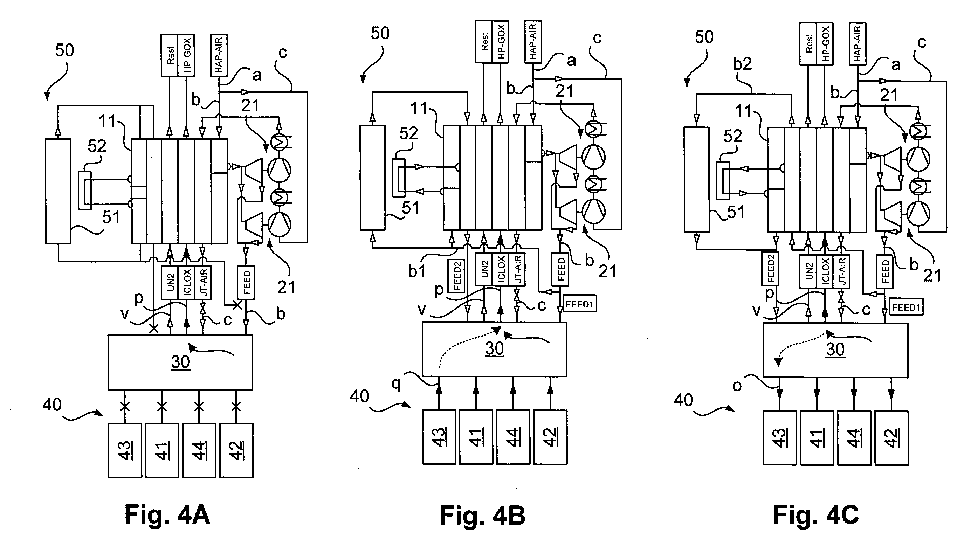

In dem zweiten Betriebsmodus, in dem die eine oder die mehreren tiefkalten Flüssigkeiten aus der Flüssigkeitsspeichereinheit ausgespeichert werden, ist grundsätzlich aufgrund der typischerweise geringeren Produktionsmengen an tiefkalter Flüssigkeit in der Rektifikationseinheit eine geringere Kältemenge für den Betrieb der Luftzerlegungsanlage erforderlich bzw. steht hier eine zusätzliche Kältemenge zur Verfügung. Diese Kältemenge kann, wie bereits erläutert, genutzt werden, indem ein Teil der durch die Entspannung auf das erwähnte Temperaturniveau von typischerweise -160 bis -170 °C abgekühlten Luft durch die Kältespeichereinheit geführt wird und diese abkühlt. Wie erwähnt erwärmt sich die Luft dabei und kann anschließend einer Abkühlung in dem Hauptwärmetauscher der Wärmetauscheinheit abgekühlt werden, so dass die entsprechende Luft letztlich auch nach dem Führen durch die Kältespeichereinheit und die dort erfolgende Erwärmung auf einem geeigneten Temperaturniveau zur Einspeisung in die Rektifikationseinheit vorliegt, nämlich wieder auf dem erwähnten Temperaturniveau von -160 bis -170 °C. Diese Luft kann daher zusammen mit der nicht zur Bildung des tiefkalten Fluidstroms verwendeten, entspannten Luft in die Rektifikationseinheit bzw. deren Hochdrucksäule eingespeist werden. Umgekehrt besteht, wie erwähnt, in dem dritten Betriebsmodus, in dem zusätzliche tiefkalte Flüssigkeit produziert und in die Flüssigkeitsspeichereinheit eingespeist wird, die Produktionsmenge also größer ist, ein zusätzlicher Kältebedarf. Dieser wird dadurch gedeckt, dass die wie zuvor erläutert entspannte Luft zunächst in dem Hauptwärmetauscher bzw. der Wärmetauscheinheit erwärmt wird, so dass entsprechende Kälte zur Abkühlung sonstiger Ströme zur Verfügung steht. Die auf diese Weise "verloren gegangene" Kälte kann anschließend in der Kälteeinheit wieder auf den erwärmten Teil der Luft übertragen werden. Nach dem Durchlaufen der Kältespeichereinheit liegt diese Luft daher wieder auf dem für die Einspeisung in die Hochdrucksäule geeigneten Temperaturniveau von -160 bis -170 °C vor. Die Bildung des tiefkalten und des warmen Fluidstroms aus der entspannten Luft ist unter Bezugnahme auf die beigefügten Figuren 3A bis 3C und 4A bis 4C weiter erläutert.

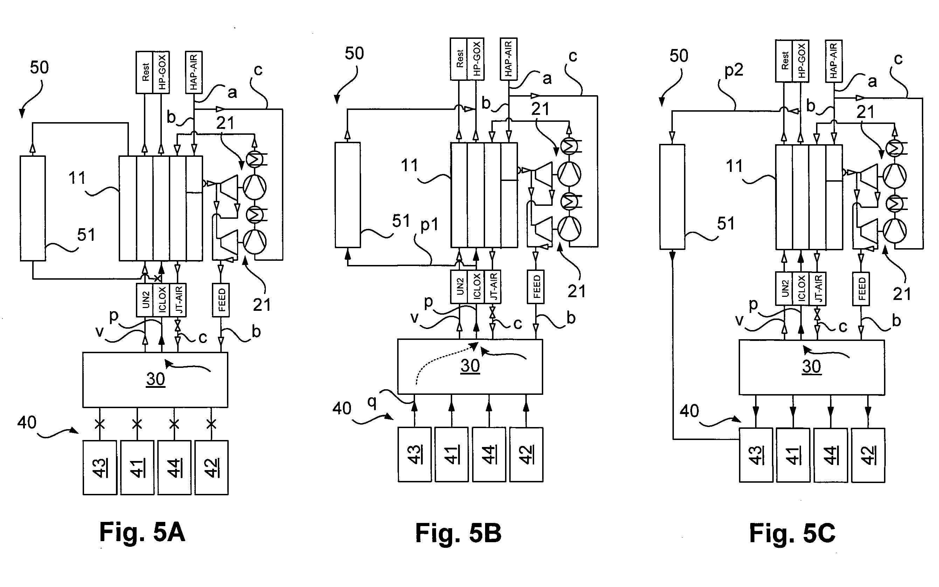

Alternativ dazu kann der tiefkalte Fluidstrom jedoch auch aus einem Teil der einen oder der mehreren, in den zweiten Betriebsmodus verdampften oder pseudoverdampften tiefkalten Flüssigkeiten vor deren Verdampfung gebildet werden. Der warme Fluidstrom kann hingegen aus einem Teil der einen oder der mehreren in dem dritten Betriebsmodus verdampften oder pseudoverdampften tiefkalten Flüssigkeiten nach deren Verdampfung gebildet werden. In dem zweiten Betriebsmodus wird dabei ein Teil der zu verdampfenden tiefkalten Flüssigkeit nicht durch den Hauptwärmetauscher sondern durch die Kältespeichereinheit geführt. Weil aufgrund der Verdampfung der zusätzlichen tiefkalten Flüssigkeit aus der Flüssigkeitsspeichereinheit zusätzliche Kälte zur Verfügung steht, kann diese in der Kältespeichereinheit eingespeichert werden, ohne dass im Hauptwärmetauscher bzw. einer Hauptwärmetauscheinheit hierdurch Einbußen zu verzeichnen wären. Die in dem Hauptwärmetauscher zur Verfügung stehende Kälte ändert sich damit nicht. Umgekehrt kann in dem dritten Betriebsmodus der warme Fluidstrom, wie erwähnt, nach der Verdampfung einer entsprechenden tiefkalten Flüssigkeit aus einem Teil dieser dann verdampften tiefkalten Flüssigkeit gebildet werden. Auf diese Weise kann beispielsweise auch direkt aus einem entsprechenden Fluidstrom erneut ein Verflüssigungsprodukt erzeugt und in der Flüssigkeitsspeichereinheit eingespeichert werden. Entsprechendes ist unter Bezugnahme auf die Figuren 5A bis 5C erläutert.

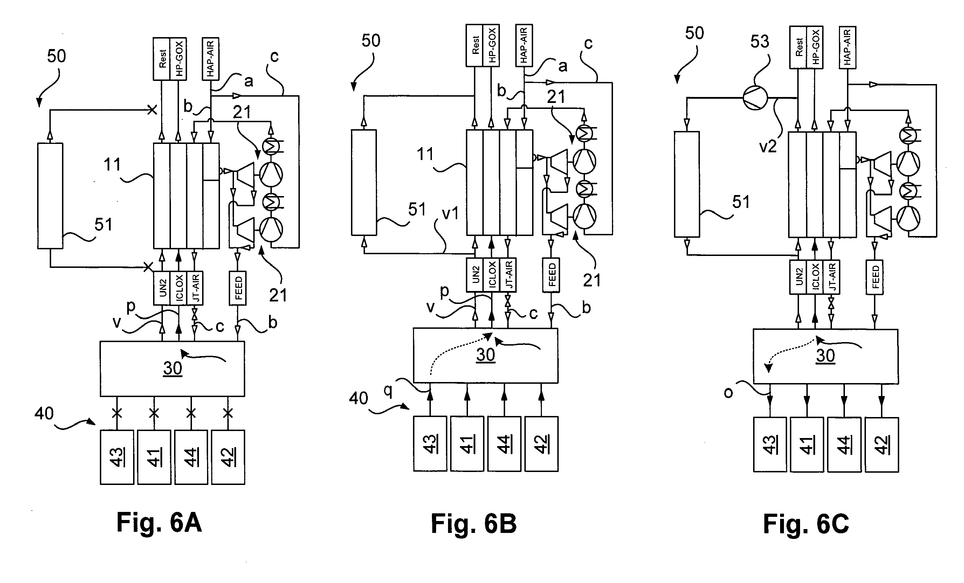

Alternativ oder zusätzlich kann sogenannter Unreinstickstoff zur Bereitstellung der entsprechenden tiefkalten und warmen Fluidströme verwendet werden. Entsprechender Unreinstickstoff stellt ein Gasgemisch dar, das einer Niederdrucksäule einer Rektifikationseinheit mit einer Hochdrucksäule und einer Niederdrucksäule entnommen wird, und das einen Stickstoffgehalt von typischerweise ca. 0,5 bis 5 Molprozent enthält. Derartiger Unreinstickstoff kann, ähnlich wie die zuvor erläuterten Fluidströme, zur Bildung des tiefkalten und des warmen Fluidstroms verwendet werden. Insbesondere kann derartiger Unreinstickstoff in dem zweiten Betriebsmodus zur Bildung des tiefkalten Fluidstroms unerwärmt durch die Kältespeichereinheit geführt werden, in dem dritten Betriebsmodus wird ein entsprechender Fluidstrom hingegen erwärmt und insbesondere mittels eines Gebläses durch eine entsprechende Einheit geführt. Mit anderen Worten können der tiefkalte und der warme Fluidstrom aus einem Teil des aus der Niederdrucksäule entnommenen Gasgemischs in Form des Unreinstickstoffs gebildet werden, wobei dieser Teil zur Bildung des tiefkalten Fluidstroms unerwärmt verwendet wird und zur Bildung des warmen Fluidstroms in der Wärmetauscheinheit erwärmt wird. Die Verwendung von Unreinstickstoff in der erläuterten Weise ist in den Figuren 6A bis 6C, 7A bis 7C und 8A bis 8C gezeigt.

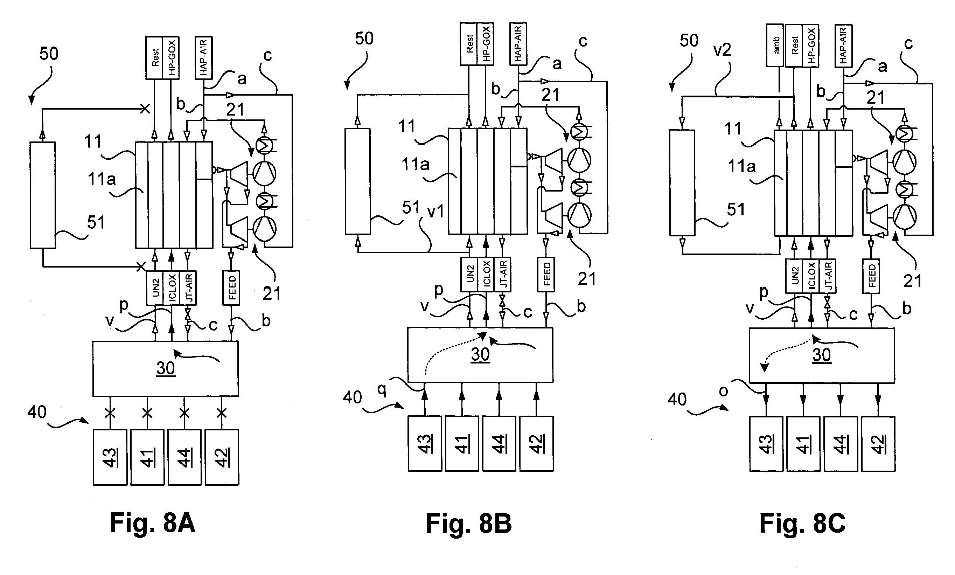

Bei der Verwendung entsprechenden Unreinstickstoffs kann insbesondere auch ein Hauptwärmetauscher mit einer weiteren Wärmetauschpassage verwendet werden, so dass ein Teil des warmen Fluidstroms nach dessen Abkühlung in der Kältespeichereinheit in der Wärmetauscheinheit erwärmt werden kann und hierdurch seine Kälte auf die übrigen Fluide in der Wärmetauscheinheit übertragen kann. Dies ist in den beigefügten Figuren 8A bis 8C gezeigt.

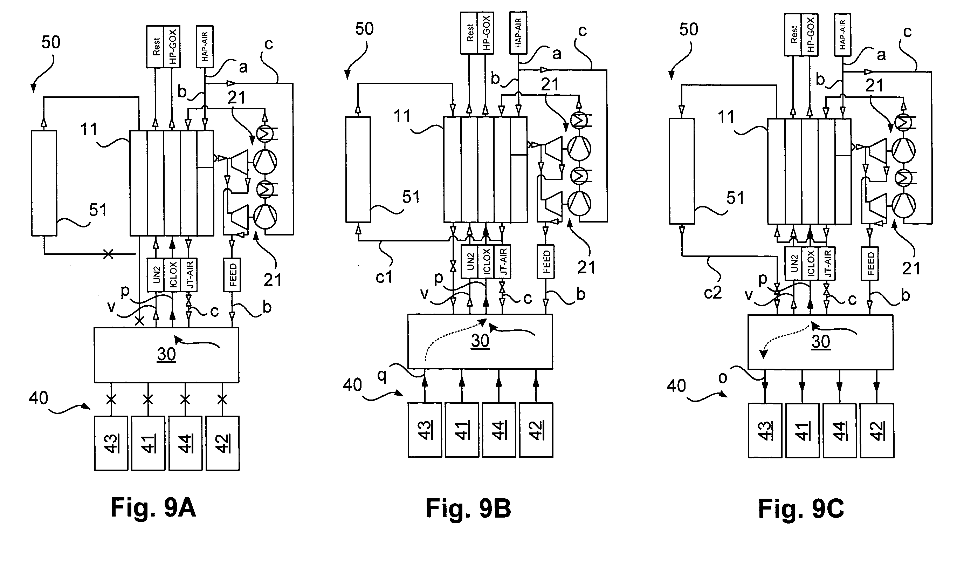

Anstelle der entspannten und in die Hochdrucksäule eingespeisten Luft kann im Rahmen einer Ausführungsform der Erfindung auch ein weiterer Druckluftstrom, nämlich der eingangs erläuterte Drosselstrom, zur Abkühlung der Kältespeichereinheit verwendet werden. So kann ein weiterer Teil der durch den Hauptluftverdichter geführten und dort verdichteten Luft anschließend weiter verdichtet und in der Wärmetauscheinheit abgekühlt werden. Entsprechende Luft wird typischerweise in bekannten Anlagen anschließend entspannt, wie unter Bezugnahme auf die Figur 1 erläutert, und in die Hochdrucksäule eingespeist. Der tiefkalte und der warme Fluidstrom können dabei aus einem Teil der weiter verdichteten und in der Wärmetauscheinheit abgekühlten Luft gebildet werden, wobei dieser Teil zur Bildung des tiefkalten Fluidstroms unerwärmt verwendet wird und zur Bildung des warmen Fluidstroms in der Wärmetauscheinheit erwärmt wird. Näheres ist auch unter Bezugnahme auf die Figuren 9A bis 9C erläutert.

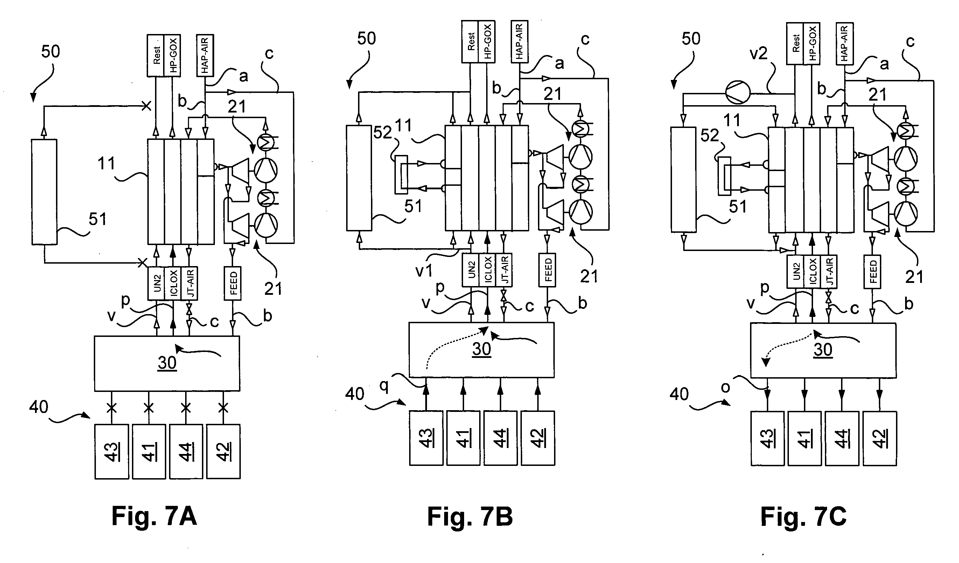

Vorteilhafterweise umfasst die Kältespeichereinheit erste Kältespeichermittel und zweite Kältespeichermittel, wobei jeweils ein erster Teil des tiefkalten und des warmen Fluidstroms durch die ersten Kältespeichermittel und ein zweiter Teil des tiefkalten und des warmen Fluidstroms durch die zweiten Kältespeichermittel geführt wird. Auf diese Weise kann eine bessere Bilanzierung der Kältespeichereinheit und des Hauptwärmetauschers erzielt werden, insbesondere wenn der zweite Teil des warmen und des tiefkalten Fluidstroms jeweils durch einen Abschnitt eines Hauptwärmetauschers der Wärmetauscheinheit geführt wird, bevor und/oder nachdem er durch die zweiten Kältespeichermittel geführt wird. Entsprechendes ist in den Figuren 4A bis 4C und 7A bis 7C veranschaulicht.

Im Rahmen der vorliegenden Erfindung können beliebige tiefkalte Flüssigkeiten verwendet werden, beispielsweise eine stickstoffreiche und/oder eine argonreiche und/oder eine sauerstoffreiche Flüssigkeit und/oder Flüssigluft.

Die Erfindung betrifft auch eine Luftzerlegungsanlage mit den Merkmalen des unabhängigen Vorrichtungsanspruchs. Bezüglich der Merkmale und Vorteile einer entsprechenden Luftzerlegungsanlage wird daher auf die obigen Erläuterungen ausdrücklich verwiesen.

Die Erfindung wird nachfolgend unter Bezugnahme auf die beigefügten Zeichnungen gegenüber dem Stand der Technik weiter erläutert.

### Kurze Beschreibung der Zeichnungen

Figur 1 zeigt eine nicht erfindungsgemäße Luftzerlegungsanlage in Form eines schematischen Flussdiagramms.
Figur 2 zeigt eine nicht erfindungsgemäße Luftzerlegungsanlage in Form eines schematischen Flussdiagramms in Teilansicht.
Figuren 3A bis 3C zeigen einen Teil einer Luftzerlegungsanlage gemäß einer Ausführungsform der Erfindung in Form von schematischen Flussdiagrammen in drei Betriebszuständen.
Figuren 4A bis 4C zeigen einen Teil einer Luftzerlegungsanlage gemäß einer Ausführungsform der Erfindung in Form von schematischen Flussdiagrammen in drei Betriebszuständen.
Figuren 5A bis 5C zeigen einen Teil einer Luftzerlegungsanlage gemäß einer Ausführungsform der Erfindung in Form von schematischen Flussdiagrammen in drei Betriebszuständen.
Figuren 6A bis 6C zeigen einen Teil einer Luftzerlegungsanlage gemäß einer Ausführungsform der Erfindung in Form von schematischen Flussdiagrammen in drei Betriebszuständen.
Figuren 7A bis 7C zeigen einen Teil einer Luftzerlegungsanlage gemäß einer Ausführungsform der Erfindung in Form von schematischen Flussdiagrammen in drei Betriebszuständen.
Figuren 8A bis 8C zeigen einen Teil einer Luftzerlegungsanlage gemäß einer Ausführungsform der Erfindung in Form von schematischen Flussdiagrammen in drei Betriebszuständen.
Figuren 8A bis 8C zeigen einen Teil einer Luftzerlegungsanlage gemäß einer Ausführungsform der Erfindung in Form von schematischen Flussdiagrammen in drei Betriebszuständen.

### Ausführliche Beschreibung der Zeichnungen

In den Figuren sind einander entsprechende Elemente mit identischen Bezugszeichen angegeben und werden der Übersichtlichkeit halber nicht wiederholt erläutert. Fluidströme sind zusätzlich mit dreieckigen Flusspfeilen gekennzeichnet, wobei ausgefüllte (schwarze) Flusspfeile Fluidströme in flüssigem Zustand und nicht ausgefüllte (weiße) Flusspfeile Fluidströme in gasförmigem Zustand bezeichnen.

In Figur 1 ist eine nicht erfindungsgemäße Luftzerlegungsanlage in Form eines vereinfachten, schematischen Flussdiagramms dargestellt. Die Luftzerlegungsanlage umfasst eine Hauptwärmetauschereinheit 10, eine Entspannungs-/Verdichtungseinheit 20, eine Rektifikationseinheit 30 und eine Flüssigkeitsspeichereinheit 40, die lediglich der Anschaulichkeit halber getrennt dargestellt sind. Insbesondere die Hauptwärmetauschereinheit 10 und die Entspannungs-/Verdichtungseinheit 20 können in der Praxis einen hohen baulichen Integrationsgrad aufweisen und beispielsweise in einer gemeinsamen Coldbox angeordnet sein.

Die Hauptwärmetauschereinheit 10 umfasst als zentrale Komponente einen Hauptwärmetauscher 11, der in Form einer oder mehrerer baulicher Einheiten ausgebildet sein kann. Die Entspannungs-/Verdichtungseinheit 20 umfasst im hier dargestellten Beispiel eine erste Boosterturbine 21 und eine zweite Boosterturbine 22. Es können jedoch eine oder mehrere Boosterturbinen durch eine oder mehrere Generatorturbinen ersetzt sein oder Kombinationen entsprechender Einheiten eingesetzt werden. Die Boosterstufe(n) einer oder mehrerer Boosterturbinen oder dergleichen kann bzw. können als konventionelle Boosterstufe(n) oder auch als sogenannte "kalte" Boosterstufe(n), deren Eingangstemperatur niedriger als die Umgebungstemperatur liegt, ausgebildet sein. Die Entspannungs-/Verdichtungseinheit 20 ist an die Hauptwärmetauschereinheit 10 bzw. deren Hauptwärmetauscher 11 thermisch gekoppelt.

Die Rektifikationseinheit 30 weist im dargestellten Beispiel eine aus einer Hochdrucksäule 31 und einer Niederdrucksäule 32 gebildete Doppelsäule auf. Die Hochdrucksäule 31 und die Niederdrucksäule 32 stehen über einen Hauptkondensator 33 in wärmetauschender Verbindung. Ferner sind beispielsweise ein Unterkühlungsgegenströmer 34, optional eine Generatorturbine 35, sowie mehrere, nicht gesondert bezeichnete Ventile und Pumpen vorgesehen. Die Flüssigkeitsspeichereinheit 40 umfasst beispielsweise einen Flüssigstickstoffspeicher 41, einen Flüssigluftspeicher 42 und einen Flüssigsauerstoffspeicher 43, die jeweils als ein oder mehrere, insbesondere isolierte, Tanks ausgebildet sein können. Ein weiterer, funktionell der Flüssigkeitsspeichereinheit 40 zugeordneter, Flüssigluftspeicher 45 kann vorgesehen sein.

Einsatzluft (AIR) wird in der in Figur 1 gezeigten Luftzerlegungsanlage in Form eines Fluidstroms a über einen vereinfacht dargestellten Hauptluftverdichter 1 angesaugt, in einer Vorkühleinheit 2 gekühlt und in einer Reinigungseinheit 3 gereinigt. Die Luftzerlegungsanlage ist zur Durchführung eines HAP-Verfahrens eingerichtet; daher verdichtet der Hauptluftverdichter 1 die durch ihn geführte Luft des Fluidstroms a auf ein entsprechend hohes, zuvor angegebenes Druckniveau, das deutlich oberhalb des höchsten in der Rektifikationseinheit 30 verwendeten Trenndrucks, d.h. des Betriebsdrucks der Hochdrucksäule 31, liegt, hier bei mindestens 9 bar.

Die entsprechend verdichtete, gekühlte und gereinigte Luft des Fluidstroms a (MPAIR) wird der Hauptwärmetauschereinheit 10 und der Entspannungs-/Verdichtungseinheit 20 zugeführt. In der Hauptwärmetauschereinheit 10 und in der Entspannungs- und Verdichtungseinheit 20 werden aus der Luft des Fluidstroms a mehrere Druckluftströme auf unterschiedlichen Druck- und Temperaturniveaus erzeugt. In Figur 1 sind ein Druckluftstrom b (FEED) zur Einspeisung in die Rektifikationseinheit 30 bzw. deren Hochdrucksäule 31 sowie weitere Druckluftströme c und d (JT1-AIR, JT2-AIR) veranschaulicht. Der Druckluftstrom b (FEED) wird dabei auf einem Druckniveau von beispielsweise ca. 5,6 bar bereitgestellt und in eine Hochdrucksäule 31 der Rektifikationseinheit 30 eingespeist. Der Druckluftstrom c (JT1-AIR) wird auf einem Druckniveau bereitgestellt, das oberhalb jenes des Druckluftstroms b (MPAIR) liegt. Der Druckluftstrom d (JT2-AIR) wird optional bereitgestellt, sein Druckniveau liegt ebenfalls oberhalb jenes des Druckluftstroms b (MPAIR). Zudem kann optional ein weiterer Druckluftstrom (LP-AIR, in Figur 1 nicht gezeigt) auf einem Druckniveau von beispielsweise ca. 1,4 bar bereitgestellt werden, welcher anschließend als sogenannte Einblaseluft in die Niederdrucksäule 32 oder durch den Hauptwärmetauscher 11 in die Umgebung geleitet wird. Die Bereitstellung der Druckluftströme b, c und d ist in der Figur 1 insbesondere in Bezug auf die Entspannungs-/Verdichtungseinheit 20 stark schematisiert gezeigt und kann auf unterschiedliche Weise erfolgen. Ein Beispiel für die Bereitstellung der Druckluftströme b, c und d ist in Figur 2 veranschaulicht.

Wie erwähnt, wird der Druckluftstrom b (FEED) in die Hochdrucksäule 31 der Rektifikationseinheit 30 eingespeist. Der Druckluftstrom c (JT1-AIR) wird in die Hochdrucksäule 31 der Rektifikationseinheit 30 entspannt. Hierbei können beispielsweise die gezeigte Generatorturbine 35 und optional ein oder mehrere nicht gesondert bezeichnete Ventile verwendet werden. Der optional bereitgestellte Druckluftstrom d (JT2-AIR) wird über ein nicht gesondert bezeichnetes Ventil ebenfalls in die Hochdrucksäule 31 der Rektifikationseinheit 30 entspannt.

In der Hochdrucksäule 31 der Rektifikationseinheit 30 wird ein sauerstoffangereichertes flüssiges Sumpfprodukt erzeugt, das in Form eines Fluidstroms e abgezogen, durch den Unterkühlungsgegenströmer 34 geführt und über ein nicht gesondert bezeichnetes Ventil in die Niederdrucksäule 32 der Rektifikationseinheit 30 entspannt wird. In der Hochdrucksäule 31 der Rektifikationseinheit 30 wird ferner ein stickstoffangereichertes gasförmiges Kopfprodukt erzeugt, das in Form eines Fluidstroms f abgezogen wird. Ein Teil des Fluidstroms f kann als gasförmiges, stickstoffreiches Luftprodukt (PGAN) aus der Luftzerlegungsanlage ausgeführt werden, der Rest kann in dem Hauptkondensator 33 verflüssigt werden.

Ein Teil des dabei gebildeten Verflüssigungsprodukts kann als flüssiges stickstoffreiches Luftprodukt (PLIN) aus der Luftzerlegungsanlage ausgeführt werden, ein Teil wird als Rücklauf auf die Hochdrucksäule 31 der Rektifikationseinheit 30 zurückgeführt. Ein weiterer Teil des Verflüssigungsprodukts kann in Form des Fluidstroms g durch den Unterkühlungsgegenströmer 34 geführt und über ein nicht gesondert bezeichnetes Ventil in die Niederdrucksäule 32 der Rektifikationseinheit 30 entspannt werden. Ein weiterer Teil des Verflüssigungsprodukts kann in Form des Fluidstroms h mittels einer der nicht gesondert bezeichneten Pumpen druckerhöht, je nach Betriebsmodus mit einem ebenfalls druckerhöhten stickstoffreichen flüssigen Fluidstrom i aus dem Flüssigstickstoffspeicher 41 der Flüssigkeitsspeichereinheit 40 und/oder vom Kopf der Niederdrucksäule 32 vereinigt, und als innenverdichteter, flüssiger stickstoffreicher Fluidstrom k (ICLIN), insbesondere in Form zweier Teilströme, im Hauptwärmetauscher 11 verdampft oder pseudoverdampft sowie anschließend als innenverdichtetes stickstoffreiches Druckprodukt auf unterschiedlichen Druckniveaus (ICGAN1, ICGAN2) bereitgestellt werden.

Sich bei der Entspannung des Druckluftstroms c und optional des Druckluftstroms d in die Hochdrucksäule 31 der Rektifikationseinheit 30 verflüssigende Luft kann in Form des Fluidstroms I unmittelbar unterhalb der Einspeisestelle der genannten Ströme abgezogen, durch den Unterkühlungsgegenströmer 34 geführt und über ein nicht gesondert bezeichnetes Ventil in die Niederdrucksäule 32 der Rektifikationseinheit 30 entspannt werden. Ein Teil kann auch in dem Flüssigluftspeicher 42 oder 45 der Flüssigkeitsspeichereinheit 40 gespeichert werden. Ein Fluidstrom m kann aus der Hochdrucksäule 31 abgezogen, durch den Unterkühlungsgegenströmer 34 geführt und über ein nicht gesondert bezeichnetes Ventil in die Niederdrucksäule 32 der Rektifikationseinheit 30 entspannt werden.

In der Niederdrucksäule 32 wird ein flüssiges, sauerstoffreiches Sumpfprodukt gebildet, das in Form eines Fluidstroms n abgezogen und je nach Betriebsmodus in Form eines Fluidstroms o in den Flüssigsauerstoffspeicher 43 eingespeist und/oder mittels einer der nicht gesondert bezeichneten Pumpen druckerhöht und als innenverdichteter, flüssiger stickstoffreicher Fluidstrom p (ICLOX) in dem Hauptwärmetauscher 11 der Hauptwärmetauschereinheit 10 erwärmt und, insbesondere in Form zweier Teilströme, im Hauptwärmetauscher 11 verdampft oder pseudoverdampft sowie als innenverdichtetes sauerstoffreiches Druckprodukt auf zwei Druckniveaus (MP-GOX, HP-GOX) bereitgestellt werden kann. Der Fluidstrom p (ICLOX) kann je nach Betriebsmodus auch unter Verwendung einer dem Flüssigsauerstoffspeicher 43 der Flüssigspeichereinheit 40 entnommenen sauerstoffreichen Flüssigkeit gebildet werden. Der Fluidstrom o ist daher bidirektional veranschaulicht. Dem Flüssigsauerstoffspeicher 43 der Flüssigspeichereinheit 40 kann ferner entsprechende sauerstoffreiche Flüssigkeit auch in Form des Fluidstroms q entnommen und über eine Pumpe in die Niederdrucksäule 32 eingespeist werden.

Zur Befüllung des Flüssigstickstoffspeichers 41 der Flüssigspeichereinheit 40 kann aus einem oberen Bereich der Niederdrucksäule 32 eine stickstoffreiche Flüssigkeit in Form eines Fluidstroms r entnommen und in Form eines Fluidstroms s in den Flüssigstickstoffspeicher 41 überführt werden. Auch der Fluidstrom s ist bidirektional dargestellt. Je nach Betriebsmodus kann dem Flüssigstickstoffspeichers 41 in Form des Fluidstroms s auch Flüssigkeit entnommen und in Form des Fluidstroms i wie oben erläutert behandelt werden. Stickstoffreiche Flüssigkeit kann aus dem Flüssigstickstoffspeicher 41 der Flüssigpeichereinheit 40 auch in Form eines Fluidstroms t in einen oberen Bereich der Niederdrucksäule 32 zurückgespeist werden. Die Flüssigkeitsspeicher 41, 42 und 43 können konstruktiv als separate Baueinheiten ausgeführt werden oder in die Rektifizierkolonnen integriert werden. In jedem Fall sind sie funktional Teil der Flüssigspeichereinheit.

Ein vom Kopf der Niederdrucksäule 32 abgezogener, stickstoffreicher Fluidstrom u kann durch den Unterkühlungsgegenströmer 34 geführt, in dem Hauptwärmetauscher 11 erwärmt und als Stickstoffprodukt (GAN) bereitgestellt werden. Ein Fluidstrom v, sogenannter Unreinstickstoff, UN2) wird vergleichbar behandelt und als sogenanntes Restgas (Rest) verwendet.

Der Flüssigluftspeicher 42 kann neben der Flüssigluft des Fluidstroms m auch mit Flüssigluft aus der Niederdrucksäule 32 in Form eines Fluidstroms w beschickt werden. Entsprechend kann Flüssigluft auch aus dem Flüssigluftspeicher 42 in Form eines Fluidstroms x über eine Pumpe in die Niederdrucksäule 32 zurückgespeist werden.

Die in Figur 1 dargestellte Luftzerlegunsganlage zeichnet sich neben dem hohen Druckniveau, auf das der Hauptluftverdichter 1 die gesamte Einsatzluft des Fluidstroms a verdichtet, insbesondere dadurch aus, dass die in das Destillationssäulensystem eingespeiste Luft überwiegend unter Verwendung einer oder mehrerer Expansionsturbinen bereitgestellt wird.

In Figur 2 ist eine Möglichkeit zur Bereitstellung der bereits in Figur 1 gezeigten Druckluftströme b (FEED) und c (JT-AIR, hier wird kein dem Fluidstrom d gemäß Figur 1 entsprechender Druckluftstrom bereitgestellt) veranschaulicht. Die Einbindung in die in Figur 1 gezeigte Luftzerlegungsanlage ergibt sich direkt aus der Bezeichnung der Fluidströme, die Entspannungs-/Verdichtungseinheit 20 und die Hauptwärmetauschereinheit 10 sind hier als Einheit 10/20 dargestellt. Wie erwähnt, können jedoch auch andere Möglichkeiten zum Einsatz kommen.

Der Fluidstrom a wird hier nach der Verdichtung in die Ströme b und c aufgeteilt. Der Teilstrom b wird dem Hauptwärmetauscher 11 warmseitig zugeführt und auf einem Zwischentemperaturniveau entnommen. Nach einer parallelen Entspannung von Teilmengen des Teilstroms b in den Entspannungsturbinen der Boosterturbinen 21 und 22 werden diese wieder vereinigt. Der Fluidstrom c wird in den Verdichterstufen der Boosterturbinen 22 und 21 verdichtet. Weil der Fluidstrom c zuvor nicht abgekühlt wurde, handelt es sich bei diesen Verdichterstufen um "warme" Verdichterstufen. In Figur 2 sind nicht gesondert bezeichnete Nachkühler veranschaulicht, die stromab der jeweiligen Verdichterstufen angeordnet sind. Der Teilstrom c wird anschließend vom warmen zum kalten Ende durch den Hauptwärmetauscher 11 geführt.

In den nachfolgenden Figuren 3A bis 3C bis 9A bis 9C sind jeweils Teilansichten von Luftzerlegungsanlagen gemäß Ausführungsformen der Erfindungen in drei Betriebszuständen veranschaulicht, wobei die Teilfiguren A jeweils den mehrfach erläuterten ersten Betriebsmodus, die Teilfiguren B jeweils den mehrfach erwähnten zweiten Betriebsmodus und die Teilfiguren C jeweils den mehrfach erwähnten dritten Betriebsmodus veranschaulichen. Die Bezeichnung der Ströme, Vorrichtungen und Apparate entspricht dabei den Figuren 1 bzw. 2. Es sind jeweils ein Hauptwärmetauscher 11, die Boosterturbinen 21 und 22, die Rektifikationseinheit 30, die Flüssigkeitsspeichereinheit 40 mit dem Flüssigstickstoffspeicher 41, dem Flüssigluftspeicher 42, dem Flüssigsauerstoffspeicher 43 und einem Flüssigargonspeicher 44 gezeigt. Nicht sämtliche dieser Speicher 41 bis 44 müssen vorhanden sein. Auch zusätzliche Speicher können vorgesehen sein. In den nachfolgenden Figuren sind jeweils nicht aktive Ströme bzw. nicht von Fluiden durchströmte Leitungen durchkreuzt veranschaulicht. Ferner sind in den Figuren eine Kältespeichereinheit 50 mit einem ersten Kältespeichermittel 51 und teilweise einem zweiten Kältespeichermittel 52 veranschaulicht.

In den Figuren 3A bis 3C ist gezeigt, wie ein Teil der mittels des Hauptluftverdichters 1 verdichteten Luft des Fluidstroms b, der anschließend entspannt wird, in einer Ausführungsform der vorliegenden Erfindung zur Kälte- bzw. Energiespeicherung und deren Rückgewinnung eingesetzt werden kann.

In dem ersten Betriebsmodus, der in Figur 3A veranschaulicht ist, ist dabei die Kältespeichereinheit 40 nicht in Betrieb. Die Luftzerlegungsanlage arbeitet im Wesentlichen so, wie es in Figur 1 in Verbindung mit Figur 2 gezeigt ist. Mit anderen Worten wird der Fluidstrom b dem Hauptwärmetauscher 11 warmseitig zugeführt, auf einen Zwischentemperaturniveau entnommen, in den Entspannungsturbinen der Boosterturbinen 21 und 22 entspannt und anschließend vollständig in die Rektifikationseinheit 30 eingespeist (FEED). Der Fluidstrom c wird mittels der Booster der Boosterturbinen 21 und 22 verdichtet, anschließend in dem Hauptwärmetauscher 11 abgekühlt und (JT-AIR) in die Rektifikationseinheit 30 eingespeist. Zu den übrigen Strömen sei auf die obigen Erläuterungen verwiesen.

Wie mit einem durchgezogenen Pfeil in der Rektifikationseinheit 30 veranschaulicht, wird hier der Fluidstrom p (ICLOX) ausschließlich durch Entnahme aus der Rektifikationseinheit 30 bzw. deren Niederdrucksäule 32 (vgl. Figur 1) bereitgestellt. Dies gilt entsprechend auch für andere flüssige Ströme.

In dem in Figur 3B veranschaulichten zweiten Betriebsmodus ist die Kältespeichereinheit 50 mit deren Kältespeichermittel 51 in Betrieb. In dem zweiten Betriebsmodus wird ein Teil des Fluidstroms b von diesem abgezweigt und in Form des Fluidstroms b1 durch die Kältespeichereinheit 50 bzw. deren Kältespeichermittel 51 geführt. Aufgrund der Abkühlung des Fluidstroms b in dem Hauptwärmetauscher 31 und seiner Entspannung in den Entspannungsturbinen der Boosterturbinen 21 und 22 liegt der Fluidstrom b1 auf einem Temperaturniveau von beispielsweise ca. -160 bis -170 °C vor. Daher kann dieser Fluidstrom b1 dazu genutzt werden, die Kältespeichereinheit 50 bzw. deren Kältespeichermittel 51 abzukühlen. Weil der Fluidstrom b1 in der Kältespeichereinheit 50 bzw. deren Kältespeichermittel 51 erwärmt wurde, muss er vor der Einspeisung in die Rektifikationseinheit 30 bzw. die Hochdrucksäule 31 wieder auf das erwähnte Temperaturniveau abgekühlt werden. Der Fluidstrom b1 wird daher nach seiner Erwärmung in der Kältespeichereinheit 50 bzw. deren Kältespeichermittel 51 in dem Hauptwärmetauscher 11 wieder auf das genannte Temperaturniveau abgekühlt. Der Fluidstrom b1 wird, wie auch der nicht durch die Kältespeichereinheit 50 bzw. deren Kältespeichermittel 51 geführte Teil des Fluidstroms b, in die Rektifikationseinheit 30, insbesondere die Hochdrucksäule 31, eingespeist. Die Einspeisung erfolgt wie bezüglich Fluidstrom c in Figur 1 gezeigt; die beiden Teilmengen sind der besseren Anschaulichkeit halber in der Figur 3B mit FEED1 und FEED2 bezeichnet.

Der Hauptwärmetauscher 11 ist zu dieser zusätzlichen Abkühlung des Fluidstroms b1 in dem zweiten Betriebsmodus in der Lage, weil aus der Flüssigkeitsspeichereinheit 40 ein oder mehrere tiefkalte Flüssigkeiten entnommen werden (vgl. auch Ströme t, s, o, q, w und x gemäß Figur 1, hier Fluidstrom q). Wie bereits unter Bezugnahme auf die Figur 1 erläutert, wird der Rektifikationseinheit 30 bzw. der Niederdrucksäule 31 sauerstoffreiche Flüssigkeit entnommen und in Form des Fluidstroms p (ICLOX) in der Wärmetauscheinheit 10 bzw. dem Hauptwärmetauscher verdampft. Wird nun ein Teil dieser sauerstoffreichen Flüssigkeit des Fluidstroms p (ICLOX) nicht mehr ausschließlich durch die Entnahme aus der Rektifikationseinheit 30 bzw. der Niederdrucksäule 31 gedeckt, sondern wird ein Teil, beispielsweise in Form des Fluidstroms q, aus dem Flüssigsauerstoffspeicher 43 der Flüssigkeitsspeichereinheit 40 entnommen, wird für die Bereitstellung derselben oder einer vergleichbaren Menge des Fluidstroms p (ICLOX) eine geringere Kältemenge benötigt. Die damit gewissermaßen "im Überschuss" bereitstehende Kälte kann auf den Fluidstrom b1 übertragen werden, der seine Kälte zuvor in die Kältespeichereinheit 50 bzw. deren Kältespeichermittel 51 übertragen hat.

Die dem Flüssigsauerstoffspeicher 41 der Flüssigkeitsspeichereinheit 40 entnommene Flüssigkeit ist mit einem gestrichelten Pfeil innerhalb der Rektifikationseinheit 30 veranschaulicht, der der Niederdrucksäule 31 entnommene Teil mit einem durchgezogenen Pfeil. Es sei ausdrücklich betont, dass außer Sauerstoff auch andere Fluide verwendet werden können, die in flüssiger Form in der Flüssigkeitsspeichereinheit 40 gespeichert und entsprechend entnommen und verdampft werden können.

In dem in Figur 3C veranschaulichten dritten Betriebsmodus wird ebenfalls eine Teilmenge des Fluidstroms b, hier mit b2 bezeichnet, zunächst in dem Hauptwärmetauscher 11 erwärmt und anschließend durch die Kältespeichereinheit 50 geführt. Der Fluidstrom b1 wird in dem Hauptwärmetauscher 11 beispielsweise von den erläuterten ca. -160 bis -170 °C auf ein Temperaturniveau oberhalb von 0 °C erwärmt. Auf diese Weise steht in dem Hauptwärmetauscher 11 eine zusätzliche Kältemenge zur Verfügung. Diese kann dazu genutzt werden, in der Niederdrucksäule 31 eine größere Menge der sauerstoffreichen Flüssigkeit zu bilden. Der nicht in Form des Fluidstroms p (ICLOX) aus der Anlage ausgeführte Anteil hiervon kann in Form des Fluidstroms o in den Flüssigsauerstoffspeicher 43 der Flüssigkeitsspeichereinheit 40 überführt werden. Die Menge des Fluidstroms p (ICLOX) bleibt dabei gleich oder vergleichbar.

Weil der Fluidstrom b2 in dem Hauptwärmetauscher 11 erwärmt wurde, muss er vor der Einspeisung in die Rektifikationseinheit 30 bzw. die Hochdrucksäule 31 wieder auf das zuvor erläuterte Temperaturniveau abgekühlt werden. Hierzu wird er nun durch die Kältespeichereinheit 50 bzw. deren Kältespeichermittel 51 geführt. Auf diese Weise wird der Kältespeichereinheit 50 bzw. deren Kältespeichermittel 51 in dem dritten Betriebsmodus die zuvor in dem zweiten Betriebsmodus gespeicherte Kälte entzogen.

In den Figuren 4A bis 4C ist die alternative Verwendung einer Wärmespeichereinheit 50 mit zwei Wärmespeichermitteln 51 und 52 veranschaulicht. Grundsätzlich sind die in den Figuren 4A bis 4C veranschaulichten Betriebsmodi dabei vergleichbar zu den in den Figuren 3A bis 3C veranschaulichten Betriebsmodi. Jedoch wird in dem zweiten Betriebsmodus nur ein Teil des Fluidstroms b1 durch die ersten Kältespeichermittel 51, ein zweiter Teilstrom des Fluidstroms b1 hingegen durch die zweiten Kältespeichermittel 52 geführt. Der zweite Teil des Fluidstroms b1 wird dabei zunächst dem Hauptwärmetauscher 11 kaltseitig zugeführt, diesem auf einem Zwischentemperaturniveau entnommen, durch die zweiten Kältespeichermittel 52 geführt und anschließend auf einem Zwischentemperaturniveau in dem Hauptwärmetauscher 11 mit dem ersten Teil des Fluidstroms b1 vereinigt. Entsprechendes gilt, in umgekehrter Richtung, auch für den dritten Betriebsmodus, der in der Figur 4C gezeigt ist. Hierbei wird der Fluidstrom b2 zunächst insgesamt dem Hauptwärmetauscher 11 kaltseitig zugeführt. Ein Teil wird bis zum warmseitigen Ende durch den Hauptwärmetauscher 11 geführt und anschließend in den ersten Kältespeichermitteln 51 abgekühlt. Ein zweiter Teil wird auf einen Zwischentemperaturniveau entnommen, durch die zweiten Kältespeichermittel geführt, anschließend auf einer Zwischentemperatur in den Hauptwärmetauscher 11 zurückgeführt und warmseitig mit dem ersten Teil des Fluidstroms b1 vereinigt.

Eine entsprechende Verwendung zweier Kältespeichermittel in einer Kältespeichereinheit und die soeben erläuterte oder eine vergleichbare Führung von Fluidströmen dient der besseren Bilanzierung des Hauptwärmetauschers 11. Sie kann grundsätzlich auch für die anderen, nachfolgend erläuterten Verfahrensvarianten und andere Ausführungsformen zum Einsatz kommen.

In den Figuren 5A bis 5C ist die alternative Verwendung von Flüssigsauerstoff bzw. eines Teils des Fluidstroms p (ICLOX) für den Betrieb der Kältespeichereinheit 50 bzw. deren Kältespeichermittel(n) gemäß einer Ausführungsform der Erfindung veranschaulicht. Wie in Figur 5B zu dem zweiten Betriebsmodus gezeigt, wird ein Teil des Fluidstroms p (ICLOX) hierbei in Form eines Fluidstroms p1 abgezweigt, durch die Kältespeichereinheit 50 bzw. deren Kältespeichermittel 51 geführt, und anschließend mit dem Rest des Fluidstroms p, der durch den Hauptwärmetauscher 31 geführt wird, vereinigt. Der durch das Kältespeichermittel 51 geführte Anteil wird, ebenso wie der Anteil, der durch die Kältespeichereinheit 50 geführt wird, verdampft. In umgekehrter Richtung wird gemäß Figur 5C in dem dritten Betriebsmodus der Fluidstrom p (ICLOX) zunächst insgesamt in dem Hauptwärmetauscher 31 erwärmt und verdampft. Anschließend wird ein Teil in Form eines Fluidstroms p2 abgezweigt, in der Kältespeichereinheit 50 bzw. deren Kältespeichermittel 51 abgekühlt und verflüssigt, und flüssig in der Flüssigkeitsspeichereinheit 40 bzw. dem Flüssigsauerstoffspeicher 43 eingespeichert.

Auch hier steht damit im zweiten Betriebsmodus gemäß Figur 5B durch die Ausspeicherung der sauerstoffreichen Flüssigkeit aus dem Flüssigsauerstoffspeicher 43 "überschüssige" Kälte zur Verfügung, die zum Abkühlen der Kältespeichereinheit 50 bzw. deren Kältespeichermittels 51 genutzt werden kann. Durch die gespeicherte Kälte kann in dem dritten Betriebsmodus gemäß Figur 5C der Flüssigsauerstoffspeicher 43 wieder befüllt werden. Die Ausführungsform gemäß Figuren 5A bis 5B kann auch mit mehreren Kältespeichermitteln entsprechend Figuren 4A bis 4C verwendet werden. Auch andere Flüssigkeiten können verwendet werden.

In den Figuren 6A bis 6C ist die Verwendung des sogenannten Unreinstickstoffs des Fluidstroms v (UN2) für die gemäß einer Ausführungsform der Erfindung eingesetzte Kältespeichereinheit 50 veranschaulicht. Ein Teil eines derartigen Fluidstroms v wird im zweiten Betriebsmodus der Figur 2B, wie hier in Form des Fluidstroms v1 veranschaulicht, durch die Kältespeichereinheit 50 bzw. deren Kältespeichermittel 51 geführt, hierbei erwärmt und anschließend mit dem in dem Hauptwärmetauscher 11 erwärmten Anteil vereinigt. In dem in Figur 6C veranschaulichten dritten Betriebsmodus wird hingegen der Fluidstrom v insgesamt erwärmt, anschließend wird ein Teil, hier in Form eines Stroms v2 veranschaulicht, abgezogen, mittels eines im Gebläses 53, das zur Aufrechterhaltung eines entsprechenden Fluidstroms erforderlich ist, durch die Kältespeichereinheit 50 bzw. deren Kältespeichermittel 51 geführt, und stromauf des Hauptwärmetauschers 11 wieder mit dem Fluidstrom v vereinigt.

In den Figuren 7A bis 7C ist die in den Figuren 6A bis 6C gezeigte Verfahrensvariante im Zusammenhang mit der Verwendung einer Kältespeichereinheit 50 mit mehreren Kältespeichermitteln 51 und 52 veranschaulicht. Die dabei gezeigten Details ergeben sich für den Fachmann unmittelbar bei einer Betrachtung der Figur 6A bis 6C zusammen mit den Figuren 4A bis 4C und den entsprechenden Erläuterungen.

In den Figuren 8A bis 8C ist in Abwandlung der in den Figuren 6A bis 6C veranschaulichten Ausführungsform gezeigt, wie eine zusätzliche Passage 11a in dem Hauptwärmetauscher 11 eingesetzt werden kann. Die Verfahrensvariante gemäß Figur 8B, also der zweite Betriebsmodus, unterscheidet sich dabei nicht nennenswert von dem in Figur 6B veranschaulichten zweiten Betriebsmodus. In dem dritten Betriebsmodus der Figur 8C wird hingegen der Unreinstickstoff des Fluidstroms v2 nach der Abkühlung in der Kältespeichereinheit 50 in dem Hauptwärmetauscher 11 erwärmt und aus der Anlage ausgeführt, beispielsweise in die Umgebung (amb) abgeblasen. Die Ausführungsform gemäß den Figuren 8A bis 8C kann auch mit mehreren Kältespeichermitteln 51, 52 zum Einsatz kommen.

In den Figuren 9A bis 9C ist schließlich gezeigt, wie auch der Fluidstrom c (JT-AIR, siehe auch Figur 2) für den Betrieb einer entsprechenden Kältespeichereinheit 50 verwendet werden kann. Hierzu wird in dem in Figur 9B veranschaulichten zweiten Betriebsmodus kaltseitig des Hauptwärmetauschers 11 ein Anteil der Luft des Fluidstroms c entnommen, wie mit Fluidstrom c1 veranschaulicht, und durch die Kältespeichereinheit 50 bzw. deren Kältespeichermittel 51 geführt. Anschließend erfolgt eine Abkühlung in dem Hauptwärmetauscher 11. Im dritten Betriebsmodus gemäß Figur 9C wird die Luft, wie mit Fluidstrom c2 veranschaulicht, zunächst in dem Hauptwärmetauscher 11 erwärmt und anschließend durch die Kältespeichereinheit 50 geführt.

## Patentansprüche

1. Verfahren zur Erzeugung eines Luftprodukts in einer Luftzerlegungsanlage (100) mit einer Wärmetauscheinheit (10), einer Entspannungs-/Verdichtungseinheit (20), einer Rektifikationseinheit (30), einer Flüssigkeitsspeichereinheit (40), einer Kältespeichereinheit (50) sowie einem Hauptluftverdichter (1), bei dem
- die gesamte, der Rektifikationseinheit (30) zugeführte Luft durch den Hauptluftverdichter (1) geführt und dort zunächst auf ein Druckniveau verdichtet wird, das mindestens 3 bar oberhalb des höchsten Druckniveaus liegt, auf dem die Rektifikationseinheit (30) betrieben wird,
- unter Verwendung der durch den Hauptluftverdichter (1) geführten Luft in der Rektifikationseinheit (30) eine oder mehrere tiefkalte Flüssigkeiten in einem ersten Betriebsmodus in einer ersten Produktionsmenge, in einem zweiten Betriebsmodus in einer zweiten Produktionsmenge und in einem dritten Betriebsmodus in einer dritten Produktionsmenge erzeugt werden,
- die eine oder die mehreren tiefkalten Flüssigkeiten in dem dritten Betriebsmodus in einer Einspeichermenge, die einer Teilmenge der dritten Produktionsmenge entspricht, in der Flüssigkeitsspeichereinheit (40) eingespeichert und in dem zweiten Betriebsmodus in einer Ausspeichermenge aus der Flüssigkeitsspeichereinheit (40) ausgespeichert werden,
- die eine oder die mehreren tiefkalten Flüssigkeiten in dem ersten Betriebsmodus in einer ersten Verdampfungsmenge, in dem zweiten Betriebsmodus in einer zweiten Verdampfungsmenge und in dem dritten Betriebsmodus in einer dritten Verdampfungsmenge verdampft und/oder pseudoverdampft werden, wobei die erste Verdampfungsmenge der ersten Produktionsmenge, die zweite Verdampfungsmenge der zweiten Produktionsmenge zuzüglich der Ausspeichermenge und die dritte Verdampfungsmenge der dritten Produktionsmenge abzüglich der Einspeichermenge entspricht, und
- unter Verwendung der durch den Hauptluftverdichter (1) geführten Luft in dem zweiten Betriebsmodus ein tiefkalter Fluidstrom, unter Verwendung dessen die Kältespeichereinheit (50) abgekühlt wird, und der sich hierdurch erwärmt, und in dem dritten Betriebsmodus ein warmer Fluidstrom, unter Verwendung dessen die Kältespeichereinheit (50) erwärmt wird, und der sich hierdurch abkühlt, gebildet werden.

2. Verfahren nach Anspruch 1, bei dem die zweite Produktionsmenge geringer als die erste Produktionsmenge und die dritte Produktionsmenge größer als die erste Produktionsmenge ist, und/oder bei dem sich die erste, die zweite und die dritte Verdampfungsmenge um nicht mehr als 20% voneinander unterscheiden.

3. Verfahren nach einem der vorstehenden Ansprüche, bei dem ein Teil der durch den Hauptluftverdichter (1) geführten und dort verdichteten Luft auf ein Druckniveau entspannt wird, das mindestens dem höchsten Druckniveau entspricht, auf dem die Rektifikationseinheit (30) betrieben wird.

4. Verfahren nach Anspruch 3, bei dem der tiefkalte und der warme Fluidstrom aus einem Teil der entspannten Luft gebildet werden, wobei der Teil der entspannten Luft zur Bildung des tiefkalten Fluidstroms nach der Entspannung unerwärmt durch die Kältespeichereinheit (50) geführt und zur Bildung des warmen Fluidstroms in der Wärmetauscheinheit (10) erwärmt und anschließend durch die Kältespeichereinheit (50) geführt wird.

5. Verfahren nach Anspruch 1 oder 2, bei dem der tiefkalte Fluidstrom aus einem Teil der einen oder der mehreren in dem zweiten Betriebsmodus verdampften oder pseudoverdampften tiefkalten Flüssigkeiten vor deren Verdampfung gebildet wird, und bei dem der warme Fluidstrom aus einem Teil der einen oder der mehreren in dem dritten Betriebsmodus verdampften oder pseudoverdampften tiefkalten Flüssigkeiten nach deren Verdampfung gebildet wird.

6. Verfahren nach Anspruch 1 oder 2, bei dem eine Rektifikationseinheit (30) mit einer Hochdrucksäule (31) und einer Niederdrucksäule (32) verwendet wird, wobei der Niederdrucksäule (32) ein Gasgemisch entnommen wird, das einen Stickstoffgehalt von 0,5 bis 5 Molprozent enthält.

7. Verfahren nach Anspruch 6, bei dem der tiefkalte und der warme Fluidstrom aus einem Teil des aus der Niederdrucksäule (32) entnommenen Gasgemischs gebildet werden, wobei dieser Teil zur Bildung des tiefkalten Fluidstroms unerwärmt verwendet wird und zur Bildung des warmen Fluidstroms in der Wärmetauscheinheit (10) erwärmt wird.

8. Verfahren nach Anspruch 7, bei dem ein Teil des warmen Fluidstroms nach dessen Abkühlung in der Kältespeichereinheit (50) in der Wärmetauscheinheit (10) erwärmt wird.

9. Verfahren nach Anspruch 1 oder 2, bei dem ein weiterer Teil der durch den Hauptluftverdichter (1) geführten und dort verdichteten Luft anschließend weiter verdichtet und in der Wärmetauscheinheit (10) abgekühlt wird.

10. Verfahren nach Anspruch 8, bei dem der tiefkalte und der warme Fluidstrom aus einem Teil der weiter verdichteten und in der Wärmetauscheinheit (10) abgekühlten Luft gebildet werden, wobei dieser Teil zur Bildung des tiefkalten Fluidstroms unerwärmt verwendet wird und zur Bildung des warmen Fluidstroms in der Wärmetauscheinheit (10) erwärmt wird.

11. Verfahren nach einem der vorstehenden Ansprüche, bei dem die Kältespeichereinheit (50) erste Kältespeichermittel (51) und zweite Kältespeichermittel (52) aufweist, wobei jeweils ein erster Teil des tiefkalten und des warmen Fluidstroms durch die ersten Kältespeichermittel (51) und ein zweiter Teil durch die zweiten Kältespeichermittel (52) geführt wird.

12. Verfahren nach Anspruch 11, bei dem der zweite Teil des warmen und des tiefkalten Fluidstroms jeweils durch einen Abschnitt eines (11) der Wärmetauscheinheit (10) geführt wird, bevor und/oder nachdem er durch die zweiten Kältespeichermittel (52) geführt wird.

13. Verfahren nach einem der vorstehenden Ansprüche, bei dem die eine oder die mehreren tiefkalten Flüssigkeiten eine stickstoffreiche und/oder eine argonreiche und/oder eine sauerstoffreiche Flüssigkeit und/oder Flüssigluft umfassen.

14. Luftzerlegungsanlage (100) mit einer Wärmetauscheinheit (10), einer Entspannungs-/Verdichtungseinheit (20), einer Rektifikationseinheit (30), einer Flüssigkeitsspeichereinheit (40), einer Kältespeichereinheit (50) sowie einem Hauptluftverdichter (1), die Mittel aufweist, die dazu eingerichtet sind,
- die gesamte, der Rektifikationseinheit (30) zugeführte Luft durch den Hauptluftverdichter (1) zu führen und dort zunächst auf ein Druckniveau zu verdichten, das mindestens 3 bar oberhalb des höchsten Druckniveaus liegt, auf dem die Rektifikationseinheit (30) betrieben wird,
- unter Verwendung der durch den Hauptluftverdichter (1) geführten Luft in der Rektifikationseinheit (30) eine oder mehrere tiefkalte Flüssigkeiten in einem ersten Betriebsmodus in einer ersten Produktionsmenge, in einem zweiten Betriebsmodus in einer zweiten Produktionsmenge und in einem dritten Betriebsmodus in einer dritten Produktionsmenge zu erzeugen,
- die eine oder die mehreren tiefkalten Flüssigkeiten in dem dritten Betriebsmodus in einer Einspeichermenge, die einer Teilmenge der dritten Produktionsmenge entspricht, in der Flüssigkeitsspeichereinheit (40) einzuspeichern und in dem zweiten Betriebsmodus in einer Ausspeichermenge aus der Flüssigkeitsspeichereinheit (40) auszuspeichern,
- die eine oder die mehreren tiefkalten Flüssigkeiten in dem ersten Betriebsmodus in einer ersten Verdampfungsmenge, in dem zweiten Betriebsmodus in einer zweiten Verdampfungsmenge und in dem dritten Betriebsmodus in einer dritten Verdampfungsmenge zu verdampfen und/oder pseudozuverdampfen, wobei die erste Verdampfungsmenge der ersten Produktionsmenge, die zweite Verdampfungsmenge der zweiten Produktionsmenge zuzüglich der Ausspeichermenge und die dritte Verdampfungsmenge der dritten Produktionsmenge abzüglich der Einspeichermenge entspricht, und
- unter Verwendung der durch den Hauptluftverdichter (1) geführten Luft in dem zweiten Betriebsmodus einen tiefkalten Fluidstrom, unter Verwendung dessen die Kältespeichereinheit (50) abgekühlt wird, und der sich hierdurch erwärmt, und in dem dritten Betriebsmodus einen warmen Fluidstrom, unter Verwendung dessen die Kältespeichereinheit (50) erwärmt wird, und der sich hierdurch abkühlt, zu bilden.

15. Luftzerlegungsanlage (100) nach Anspruch 14, mit Mitteln, die zur Durchführung eines Verfahrens nach einem der Ansprüche 1 bis 14 eingerichtet sind.
